# EUROPÄISCHE PATENTSCHRIFT

(11) **EP 1 540 895 B1**
(45) Veröffentlichungstag und Bekanntmachung des Hinweises auf die Patenterteilung: **26.10.2011**
(21) Anmeldenummer: 03750325.7
(22) Anmeldetag: 05.09.2003
(51) Int. Cl.: H04L 12/56

(54) **VERFAHREN ZUR PERMANENTEN REDUNDANTEN ÜBERTRAGUNG VON DATENTELEGRAMMEN IN KOMMUNIKATIONSSYSTEMEN**
METHOD FOR PERMANENT REDUNDANT TRANSMISSION OF DATA TELEGRAMS IN COMMUNICATION SYSTEMS
PROCEDE DE TRANSMISSION REDONDANTE PERMANENTE DE MESSAGES DE DONNEES DANS DES SYSTEMES DE COMMUNICATION

(30) Priorität: 18.09.2002 DE 10243384
(43) Veröffentlichungstag der Anmeldung: 15.06.2005
(73) Patentinhaber: SIEMENS AKTIENGESELLSCHAFT, 80333 München (DE)
(72) Erfinder: BRÜCKNER, Dieter, 96199 Unterleiterbach (DE); KLOTZ, Dieter, 90768 Fürth (DE); KRAUSE, Karl-Heinz, 90475 Nürnberg (DE)
(86) Internationale Anmeldenummer: PCT/DE2003/002958
(87) Internationale Veröffentlichungsnummer: WO 2004/030284

(56) Entgegenhaltungen:
- EP-A- 1 168 714
- US-A- 5 859 959
- US-A- 6 081 511
- US-A1- 2002 116 669

## Beschreibung

Die Erfindung betrifft ein Verfahren zur permanenten redundanten Übertragung von Datentelegrammen in Kommunikationssystemen. Ferner betrifft die Erfindung ein entsprechendes Kommunikationssystem und einen Teilnehmer eines solchen Kommunikationssystems.

Unter einem Kommunikationssystem versteht man ein System mit mehreren Teilnehmern, die mittels Netzwerkverbindungen zum Zweck des gegenseitigen Austausches von Daten bzw. der gegenseitigen Übertragung von Daten untereinander verbunden sind. Die zu übertragenden Daten werden dabei als Datentelegramme verschickt, d.h., die Daten werden zu einem oder mehreren Paketen zusammengepackt und in dieser Form über die Netzwerkverbindungen an die entsprechenden Empfänger gesendet. Man spricht deshalb auch von Datenpaketen. Der Begriff "Übertragung von Daten" wird dabei im weiteren synonym zur oben erwähnten Übertragung von Datentelegrammen oder Datenpaketen verwendet.

Teilnehmer eines Kommunikationssystems sind beispielsweise zentrale Automatisierungsgeräte, Programmier-, Projektierungs- und Bediengeräte, Peripheriegeräte wie z.B. Ein-/Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Teilnehmer werden auch Netzwerkknoten oder Knoten genannt.

Unter Kontrolleinheiten werden im Folgenden Regler- oder Steuerungseinheiten jeglicher Art verstanden, aber auch beispielsweise Koppelknoten (so genannte Switches) und/oder Switch Controller. Als Kommunikationssysteme bzw. Datennetze werden beispielsweise geschaltete Kommunikationssysteme, wie Switched Ethernet, Industrial Ethernet, insbesondere aber auch isochrones Realtime Ethernet, verwendet.

Kommunikationssysteme mit Transferraten ≥ 100 MB/s sind üblicherweise geschaltete Hochleitungsdatennetze und bestehen aus einzelnen Punkt-zu-Punkt-Verbindungen mit so genannten aktiven Knoten oder Koppelknoten, auch Switches genannt, die jeweils zwischen die einzelnen Teilnehmer geschaltet sind. Jeder Koppelknoten weist in der Regel mehrere Ports auf und kann deshalb je nach Port-Anzahl mit der entsprechenden Anzahl von Teilnehmern verbunden sein. Ein Switch kann auch selbst Teilnehmer sein. Diese Koppelknoten oder Switches sind derzeit separate Geräte, die jedoch verstärkt direkt in die angeschlossenen Geräte bzw. Teilnehmer integriert werden. Eine solche, kostengünstige Integration der Switches bzw. Switchfunktionalität in die einzelnen Teilnehmer bzw. Automatisierungsgeräte wird durch die so genannte VLSI-Technologie (Very Large Scale Integration) möglich. Dadurch können bei Kommunikationssystemen wesentlich größere Ausdehnungen bei günstiger Verkabelung erreicht werden, da immer nur von Teilnehmer zu Teilnehmer weiterverbunden wird.

Bei solchen Kommunikationssystemen mit sehr vielen Teilnehmern, insbesondere bei Linienanordnungen, bringt der aktive Knoten bzw. Switch Probleme mit sich. Fällt ein Teilnehmer aus, so fällt die gesamte Linie aus. Das Gleiche gilt beim Einfügen eines zusätzlichen Teilnehmers, bei der kurzfristig das Kommunikationssystem aufgetrennt werden muss. Wünschenswert wäre das Schließen der Linie mit einem redundanten Pfad zu einem Ring. Bei einem Fehler auf einer Netzwerkverbindung, beispielsweise einer Auftrennung bzw. auch einem Ausfall eines Teilnehmers, könnte der Datenverkehr alternativ über die verbleibenden Netzwerkverbindungen abgewickelt werden. Solche redundanten Pfade führen aber bei selbstständiger Zielfindung und/oder bei Broad-/Multicast-Adressierung zu zirkulierenden Datentelegrammen. Aus diesem Grund wird beim Hochlauf eines Kommunikationssystems dieses auf mögliche Zirkularitäten untersucht und das Kommunikationssystem an einer passenden Stelle logisch aufgetrennt. Der redundante Pfad wird nur im Stand-by-Modus verwendet, d.h. bei Störungen wird im Rahmen einer Neukonfiguration auf die Ersatzpfade umgeschaltet. Der durch diese Umkonfiguration entstehende Betriebsausfall ist jedoch für viele Anwendungen in der Automatisierungstechnik nicht tragbar.

Für die Erkennung von Zirkularitäten in einem Kommunikationssystem ist ein Verfahren bekannt bzw. wird von der Norm IEEE 802.1Q vorgeschrieben. Dieses Verfahren wird auch "Spanning Tree" bzw. "Fast Spanning Tree"-Verfahren genannt. Je einfacher die Topologie eines Kommunikationssystems bzw. je kleiner das Kommunikationssystem ist, umso schneller kann ein Fehler im Kommunikationssystem erkannt und eine dynamische Umkonfiguration durchgeführt werden. Diese Rekonfiguration beinhaltet wiederum eine Überprüfung auf Zirkularitäten innerhalb des Kommunikationsnetzes und dauert, abhängig von der Topologie und Größe, bis in den zweistelligen Sekundenbereich. Für eine Ringanordnung eines Kommunikationssystems sind durch spezielle Verfahren Zeiten unter 1 Sekunde möglich. Solche Zeitdauern sind bisher in den Einsatzbereichen solcher Kommunikationsnetze akzeptabel.

Aus der US-A-6 081 511 ist ein Verfahren zur Verteilung der Kommunikationslast auf redundante Datenverbindungen eines Kommunikationsnetzwerks bekannt. Die Zuordnung eines Datenpakets zu einer bestimmten Datenverbindung erfolgt durch eine im Datenpaket vorhandene Kennung, welche die Verbindung eindeutig kennzeichnet.

Aus der US 2002/116669 A1 ist ein weiteres Kommunikationsnetzwerk mit redundanten Datenverbindungen bekannt. Tritt in einer Datenverbindung ein Fehler auf, wird dieser durch spezielle Fehlermitteilungstelegramme, die als solche in Telegramm-Header gekennzeichnet sind, im Netzwerk bekanntgemacht. Um eine schnelle Weiterleitung der Telegramme durch das Netzwerk zu erreichen, senden Knoten, die ein derartiges Telegramm an einem Port empfangen, dieses über mehrere Ports an ihre Nachbarknoten weiter.

In der EP 1 168 714 A2 ist ein Kommunikationsnetzwerk beschrieben, in welchem Endgeräte zur Realisierung einer Redundanz zwei unabhängige Schnittstellen aufweisen, die mit verschiedenen Netzwerkknoten verbunden sind. Durch die redundante Auslegung der Datenverbindungen bis zu den Endgeräten hin wird das Risiko verringert, dass Daten verlorengehen oder aufgrund von Systemfehlern zerstört werden.

Aus der US-A-5 859 959 ist ein weiteres Kommunikationsnetzwerk bekannt, in welchem Datenverbindungen zur Erhöhung der Verfügbarkeit des Kommunikationsnetzwerks redundant ausgelegt sind.

Mit den derzeitigen Verfahren ist jedoch eine zeitlich völlig stoßfreie bzw. transparente Umschaltung beim Auftreten von Fehlern nicht möglich. Um Stoßfreiheit und Transparenz zu gewährleisten, müssen Datentelegramme permanent auf disjunkten Netzwerkpfaden redundant übertragen werden. Eine solche permanente Nutzung redundanter Netzwerkpfade ist bei einer vollständigen Vorabhinterlegung der Wegeinformationen eines Datentelegrammtransfers in allen jeweils beteiligten Teilnehmern des Kommunikationssystems möglich. Ein solches Verfahren ist insbesondere für die isochrone Realtime Ethernet Kommunikation aus der DE 10058524.8 bekannt. Bei einer Datenkommunikation mit selbstständiger Wegesuche, also einer adressbasierten Datenkommunikation, ist dagegen keine entsprechende Lösung bekannt.

Der Erfindung liegt daher die Aufgabe zugrunde, ein Verfahren, ein Kommunikationssystem sowie einen Teilnehmer des Kommunikationssystems anzugeben, welches eine permanente redundante Übertragung von Datentelegrammen ermöglicht.

Diese Aufgabe wird durch ein Verfahren zum Einspeisen und/oder zum Empfang und/oder zur Weiterleitung von Datentelegrammen in einem Kommunikationssystem, insbesondere zur Echtzeitkommunikation, mit mehreren Teilnehmern gelöst, die mittels Netzwerkpfaden miteinander verbunden sind, wobei jeder Teilnehmer als Sender und/oder Empfänger von Datentelegrammen ausgeprägt und mit einer eindeutigen Adresse ausgestattet ist, wenigstens einen ersten und einen zweiten Port zum Empfang und/oder zur Weiterleitung und wenigstens einen weiteren Port zum Einspeisen und/oder zum Empfang und/oder zur Weiterleitung von Datentelegrammen, die zur redundanten Weiterleitung vorgesehen sind, und eine Adresstabelle zur Speicherung wenigstens einer Absendeadresse eines eingespeisten Datentelegramms aufweist und wobei das Kommunikationssystem wenigstens einen Netzwerkpfad mit einer logischen Unterbrechung aufweist, mit folgenden Schritten:
- Kennzeichnung von Datentelegrammen, die zur redundanten Weiterleitung vorgesehen sind,
- Einspeisung der Datentelegramme, die zur redundanten Weiterleitung vorgesehen sind, in das Kommunikationssystem an einem der weiteren Ports eines Teilnehmers ,
- Duplizieren eines der Datentelegramme, die zur redundanten Weiterleitung vorgesehen sind, bei einem Teilnehmer beim Empfang des Datentelegramms über den ersten oder zweiten Port und Weiterleitung über einen weiteren Port des Teilnehmers,
   oder
   beim Empfang des Datentelegramms über einen weiteren Port und Weiterleitung über den ersten oder zweiten Port des Teilnehmers
- Weiterleitung eines duplizierten Datentelegramms über den ersten Port des Teilnehmers bei Empfang oder Weiterleitung eines Datentelegramms, das zur redundanten Weiterleitung vorgesehen ist, über den zweiten Port des Teilnehmers,
- Weiterleitung eines duplizierten Datentelegramms über den zweiten Port des Teilnehmers bei Empfang oder Weiterleitung eines Datentelegramms, das zur redundanten Weiterleitung vorgesehen ist, über den ersten Port des Teilnehmers.

Die der Erfindung zugrunde liegende Aufgabe wird ebenfalls durch einen Teilnehmer für ein Kommunikationssystem mit den Merkmalen des unabhängigen Patentanspruchs 12 sowie durch ein Kommunikationssystem mit den Merkmalen des unabhängigen Patentanspruchs 24 gelöst.

Nach einer bevorzugten Ausführungsform der Erfindung werden Datentelegramme, die zur redundanten Weiterleitung vorgesehen sind, mit einer eindeutigen Header-Kennung gekennzeichnet. Weiterhin werden erfindungsgemäß in einem Kommunikationssystem Netzwerkpfade mit einer logischen Unterbrechung nur von den Datentelegrammen benutzt, die als zur redundanten Weiterleitung vorgesehene Datentelegramme gekennzeichnet sind. Der durch eine solche Kennzeichnung im Header eines Datentelegramms eingeführte Datentelegrammtyp ignoriert die logische Auftrennung solcher Netzwerkpfade, die für Datentelegramme mit keiner oder einer anderen Kennzeichnung nicht benutzbar sind. Mit einer solchen Kennung können alle Datentelegramme versehen werden, die wichtige bzw. kritische, insbesondere zeitkritische Daten enthalten und aus diesem Grund unbedingt ihren Empfänger erreichen müssen. Das Erkennen solcher Telegramme, die beispielsweise auch als R-Datentelegramme bezeichnet werden, ist sowohl hardwaretechnisch als auch softwaretechnisch möglich. Der Datenverkehr auf einem solchen, so genannten redundanten Netzwerkpfad, also einem Netzwerkpfad mit einer logischen Unterbrechung, ist somit vorteilhafterweise ausschließlich Datentelegrammen mit kritischen bzw. ansonsten wichtigen Daten vorbehalten.

Nach einer weiteren bevorzugten Ausführungsform der Erfindung wird beim Einspeisen eines Datentelegramms, das als zur redundanten Weiterleitung vorgesehen gekennzeichnet ist, in das Kommunikationssystem an einem der weiteren Ports eines Teilnehmers, die Absendeadresse des Teilnehmers, der das Datentelegramm in das Kommunikationssystem einspeist, und eine zusätzliche Markierung in der Adresstabelle des einspeisenden Teilnehmers eingetragen. Das Einspeisen von Datentelegrammen in das Kommunikationssystem erfolgt immer über einen der weiteren Ports eines Teilnehmers, also über einen der Ports, die potenziell nicht zur Weiterleitung von redundantem Datenverkehr vorgesehen sind. Im Gegensatz dazu sind der erste und der zweite Port eines Teilnehmers prinzipiell für die Weiterleitung von redundantem Datenverkehr vorgesehen und für den Switch entsprechend gekennzeichnet. Dies bedeutet, dass jeder Teilnehmer zwei Ports kennt, die zur Weiterleitung von redundantem Datenverkehr vorgesehen sind. Alle weiteren Ports des Teilnehmers sind prinzipiell nicht zur Weiterleitung von redundantem Datenverkehr vorgesehen. Dies bedeutet, dass Netzwerkpfade in einem Kommunikationssystem mit einer logischen Unterbrechung erfindungsgemäß an beiden Enden des Netzwerkpfades jeweils an einem Port eines Teilnehmers angeschlossen sind, der zur Weiterleitung von redundantem Datenverkehr vorgesehen ist, da nur Datentelegramme, die als zur redundanten Weiterleitung vorgesehene Datentelegramme gekennzeichnet sind, diese Netzwerkpfade benutzen können. Dies bedeutet weiterhin, dass Netzwerkpfade, die zwei zur Übertragung von redundantem Datenverkehr vorgesehene Ports verbinden, falls nötig, logisch aufgetrennt werden können. Im übrigen können sowohl Datentelegramme, die nicht zur redundanten Weiterleitungvorgesehen sind, als auch Datentelegramme, die zur redundanten Weiterleitung vorgesehen sind, prinzipiell alle Ports der jeweiligen Teilnehmer benutzen, mit Ausnahme der oben genannten Rahmenbedingungen.

Insbesondere das Einspeisen von beliebigen Datentelegrammen, also sowohl von Datentelegrammen, die zur redundanten Weiterleitung vorgesehen sind als auch von Datentelegrammen, die nicht zur redundanten Weiterleitung vorgesehen sind, erfolgt über einen der weiteren Ports eines Teilnehmers in das Kommunikationssystem. Durch das Eintragen der Absendeadresse des einspeisenden Teilnehmers sowie einer zusätzlichen Markierung in der jeweiligen Adresstabelle des einspeisenden Teilnehmers wird dafür gesorgt, dass zirkulierende Telegramme zuverlässig erkannt werden können, wodurch in einem späteren Schritt auch eine gezielte Vernichtung solcher zirkulierender Telegramme möglich ist und somit eine schädliche Überlastung der Netzwerkpfade vermieden werden kann.

Besonders vorteilhaft ist es, wenn die zusätzliche Markierung aus einem Bit besteht, welches zwei Werte, 0 oder 1, annehmen kann. Dabei kann das Eintragen der zusätzlichen Markierung, beispielsweise das Setzen des entsprechenden Bits, welches auch als Filter-Bit, kurz F-Bit, bezeichnet wird, das Setzen des F-Bits auf den Wert 1 bedeuten, oder, wenn das F-Bit standardmäßig mit dem Wert 1 vorbelegt ist, kann das Setzen des F-Bits auch Setzen auf den Wert 0 bedeuten. Ist eine zusätzliche Markierung in der Adresstabelle des zugehörigen Teilnehmers vorhanden, ist also das F-Bit gesetzt, bedeutet dies, dass der entsprechende Teilnehmer der einspeisende Teilnehmer ist.

Nach einer weiteren bevorzugten Ausführungsform der Erfindung wird beim Empfang eines Datentelegramms, das als zur redundanten Weiterleitung vorgesehen gekennzeichnet ist, an einem der weiteren Ports eines Teilnehmers überprüft, ob die Adresstabelle des empfangenden Teilnehmers einen Eintrag mit der Absendeadresse des Teilnehmers, der das Datentelegramm in das Kommunikationssystem eingespeist hat, und einer zusätzlichen Markierung aufweist, wobei die Absendeadresse des Teilnehmers, der das Datentelegramm in das Kommunikationssystem eingespeist hat und/oder eine zusätzliche Markierung in der Adresstabelle des empfangenden Teilnehmers eingetragen und das betreffende Datentelegramm weitergeleitet wird, falls ein solcher Eintrag nicht vorhanden ist, oder wobei das betreffende Datentelegramm weitergeleitet wird, falls ein solcher Eintrag vorhanden ist. Dies bedeutet, dass beim Empfang eines Datentelegramms, das als zur redundanten Weiterleitung vorgesehen gekennzeichnet ist, geprüft wird, ob die Absendeadresse des Teilnehmers, der das Datentelegramm in das Kommunikationssystem eingespeist hat, in der Adresstabelle eingetragen ist. Ist der Empfangsport für eine redundante Weiterleitung vorgesehen, wird zusätzlich das F-Bit geprüft. Ist die Absendeadresse des Datentelegramms in der Adressetabelle eingetragen und ist das F-Bit gesetzt, wenn der Empfangsport für eine redundante Weiterleitung vorgesehen ist, handelt es sich um ein zirkulierendes Telegramm, das nicht weitergeleitet wird. Die Absendeadressen von Telegrammen, die an solchen redundanten Ports empfangen werden, werden nicht "gelernt", d.h. diese Absendeadressen und der Empfangsport werden nicht in die Adresstabelle eingetragen. Ist der Empfangsport dagegen nicht für eine redundante Übertragung vorgesehen, wird bei einem Telegramm, das für die redundante Übertragung vorgesehen ist und das an diesem Empfangsport in das redundante Kommunikationssystem eingespeist wird, nur die Absendeadresse dieses Telegramms in die Adresstabelle eingetragen und das F-Bit gesetzt. Es handelt sich in diesem Fall um den Einspeisepunkt, also um den einspeisenden Teilnehmer. Darüber hinaus wird in diesem Fall die Adresstabelle der jeweiligen Teilnehmer für das "Lernen" von Adressen für den regulären nichtredundanten Datenverkehr nicht verändert. "Lernen" bedeutet, dass beim Empfang eines Datentelegramms sowohl die Adresse des Absenders als auch der Port, über den das Datentelegramm empfangen wurde, in die Adresstabelle des empfangenden Teilnehmers eingetragen wird. Dadurch können Datentelegramme, die zum entsprechenden Absender gesendet werden sollen, gezielt weitergeleitet werden. Mit "Lernen" ist also die Beziehung zwischen der Absendeadresse des Teilnehmers, der das Datentelegramm in das Kommunikationssystem eingespeist hat und dem Port, über den das Datentelegramm beim entsprechenden Teilnehmer empfangen wurde gemeint. Kein "Lernen" bedeutet in diesem Fall, dass beim Empfang eines Datentelegramms, das als zur redundanten Weiterleitung vorgesehen gekennzeichnet ist, nicht der entsprechende Port eingetragen wird, über den das entsprechende Datentelegramm empfangen wurde, wie das bei den übrigen Datentelegrammen der Fall ist.

Mit diesem Verfahren ist eine spätere zweifelsfreie Identifizierung eines Datentelegramms, das in ein redundantes Kommunikationssystem eingespeist wird gewährleistet und kann deshalb gefiltert werden, wenn es an einem redundanten Empfangsport des einspeisenden Teilnehmers, bzw. Knotens wieder empfangen wird.

Nach einer weiteren besonders bevorzugten Ausführungsform der Erfindung wird beim Empfang eines Datentelegramms, das als zur redundanten Weiterleitung vorgesehen gekennzeichnet ist, und/oder eines duplizierten Datentelegramms über den ersten oder zweiten Port eines Teilnehmers überprüft, ob die Adresstabelle des empfangenden Teilnehmers einen Eintrag mit der Absendeadresse des Teilnehmers, der das betreffende Datentelegramm in das Kommunikationssystem eingespeist hat, und einer zusätzlichen Markierung aufweist, wobei das betreffende Datentelegramm und/oder das duplizierte Datentelegramm vernichtet wird, falls ein solcher Eintrag vorhanden ist, oder wobei das betreffende Datentelegramm und/oder das duplizierte Datentelegramm weitergeleitet wird, falls keine Absendeadresse oder eine Absendeadresse ohne zusätzliche Markierung vorhanden ist. Beim Empfang eines Datentelegramms, das als zur redundanten Weiterleitung vorgesehen gekennzeichnet ist, über den ersten oder den zweiten Port eines Teilnehmers, also über einen der zwei Ports eines Teilnehmers, die potenziell zur Weiterleitung von redundantem Datenverkehr vorgesehen sind, werden zirkulierende Datentelegramme durch eine Überprüfung der Einträge und der zusätzlichen Markierungen in der entsprechenden Adresstabelle des empfangenden Teilnehmers identifiziert und vernichtet, so dass sie aus dem Kommunikationssystem verschwinden und nicht weiter im Kommunikationssystem zirkulieren. Ist ein solcher Eintrag dagegen nicht vorhanden, wird das entsprechende Datentelegramm einfach weitergeleitet, ein entsprechendes "Lernen", wie für die übrigen Datentelegramme vorgesehen, wird dabei nicht durchgeführt. Dasselbe gilt natürlich auch für die duplizierten Telegramme von Datentelegrammen, die als zur redundanten Weiterleitung vorgesehene Datentelegramme gekennzeichnet sind. Die zusätzliche Markierung ist dabei beispielsweise durch das Setzen des bereits erwähnten Filter-Bits erfolgt.

Nach einer weiteren bevorzugten Ausführungsform der Erfindung arbeitet das Kommunikationssystem zyklisch, d.h., dass eine Datenübertragung in bestimmten Kommunikationszyklen von beispielsweise bestimmter zeitlicher Länge erfolgt. Dabei wird einem Datentelegramm, insbesondere einem Datentelegramm, das als zur redundanten Weiterleitung vorgesehen gekennzeichnet ist, beim Einspeisen in das Kommunikationssystem eine aktuelle Zyklusnummer und eine Frame-ID zugewiesen. Die Zyklusnummer kennzeichnet den aktuellen Kommunikationszyklus des Kommunikationssystems und dient zur Identifizierung, ob die Daten eines Datentelegramms veraltet oder aktuell sind.

Nach einer weiteren bevorzugten Ausführungsform der Erfindung speichert der Empfänger eines Datentelegramms, insbesondere eines Datentelegramms, das als zur redundanten Weiterleitung vorgesehen gekennzeichnet ist, die aktuelle Zyklusnummer sowie die Frame-ID des empfangenen Datentelegramms ab. Weiterhin vergleicht der Empfänger eines Datentelegramms, insbesondere eines Datentelegramms, das als zur redundanten Weiterleitung vorgesehen gekennzeichnet ist, beim Empfang des Datentelegramms die Zyklusnummer des empfangenen Datentelegramms mit der beim Empfänger abgespeicherten aktuellen Zyklusnummer, wobei der Empfänger, bei gleicher Frame-ID, die Daten des empfangenen Datentelegramms übernimmt, falls die beiden verglichenen Zyklusnummern nicht übereinstimmen, oder, wobei der Empfänger die Daten des empfangenen Datentelegramms ignoriert und/oder das Datentelegramm vernichtet, falls die beiden verglichenen Zyklusnummern übereinstimmen. Der Empfänger eines solchen Datentelegramms hat somit die Mittel und Informationen zur Hand, um einerseits aktuelle Datentelegramme von veralteten Datentelegrammen zu unterscheiden und andererseits die entsprechenden Informationen bzw. Daten von aktuellen Datentelegrammen zu übernehmen bzw. bei einer bereits erfolgten Aktualisierung veraltete Daten bzw. Datentelegramme zu verwerfen bzw. zu vernichten. Eine erfindungsgemäße Aufspaltung eines Datentelegramms, das als zur redundanten Weiterleitung vorgesehen gekennzeichnet ist, auf zwei Telegramme, kann somit an der Verzweigungsstelle transparent erfolgen und erfordert beim Empfänger keine zusätzliche Belastung durch den Empfang zweier Telegramme, wenn dies entsprechend hardware-unterstützt ist. Für ein zyklisch arbeitendes Kommunikationssystem kann diese Überprüfung hardwaremäßig unterstützt werden, es sind jedoch auch softwaremäßige Unterstützungen denkbar, bei denen die Telegramme jedoch immer empfangen werden müssen. Eine softwaremäßige Unterstützung zur Erkennung von aktuellen bzw. veralteten Datentelegrammen ist auch bei nicht zyklisch arbeitenden Kommunikationssystemen möglich und denkbar. Die softwaremäßige Bearbeitung der zwei redundanten Datentelegramme beim Empfänger kann beispielsweise über die Header-Kennung der Datentelegramme erfolgen und ist deshalb beliebig anwendbar.

Von besonderem Vorteil ist es darüber hinaus, dass die offenbarten Verfahren in Automatisierungssystemen, insbesondere bei und in Verpackungsmaschinen, Pressen, Kunststoffspritzmaschinen, Textilmaschinen, Druckmaschinen, Werkzeugmaschinen, Robotern, Handlingsystemen, Holzverarbeitungsmaschinen, Glasverarbeitungsmaschinen, Keramikverarbeitungsmaschinen sowie Hebezeugen eingesetzt bzw. verwendet werden können.

Im Weiteren werden bevorzugte Ausführungsbeispiele der Erfindung mit Bezugnahme auf die Zeichnungen näher erläutert. Es zeigen:
- FIG 1: ein Blockschaltbild eines Ausführungsbeispiels eines erfindungsgemäßen Kommunikationssystems,
- FIG 2: ein Flussdiagramm eines erfindungsgemäßen Verfahrens zum Empfang eines Datentelegramms, das als zur redundanten Weiterleitung vorgesehen gekennzeichnet ist, an einem redundanten Empfangsport,
- FIG 3: ein Flussdiagramm eines erfindungsgemäßen Verfahrens zum Empfang eines Datentelegramms, das als zur redundanten Weiterleitung vorgesehen gekennzeichnet ist, an einem nichtredundanten Empfangsport,
- FIG 4: ein Flussdiagramm eines erfindungsgemäßen Verfahrens zum Empfang von Datentelegrammen, die nicht zur redundanten Weiterleitung vorgesehen sind, an einem beliebigen Empfangsport,
- FIG 5, 6, 7 und 8: mögliche Szenarien beim erfindungsgemäßen Durchleiten, Weiterleiten bzw. Duplizieren von Datentelegrammen, die als zur redundanten Weiterleitung vorgesehen gekennzeichnet sind, und
- FIG 9: ein Ausführungsbeispiel des erfindungsgemäßen Verfahrens.

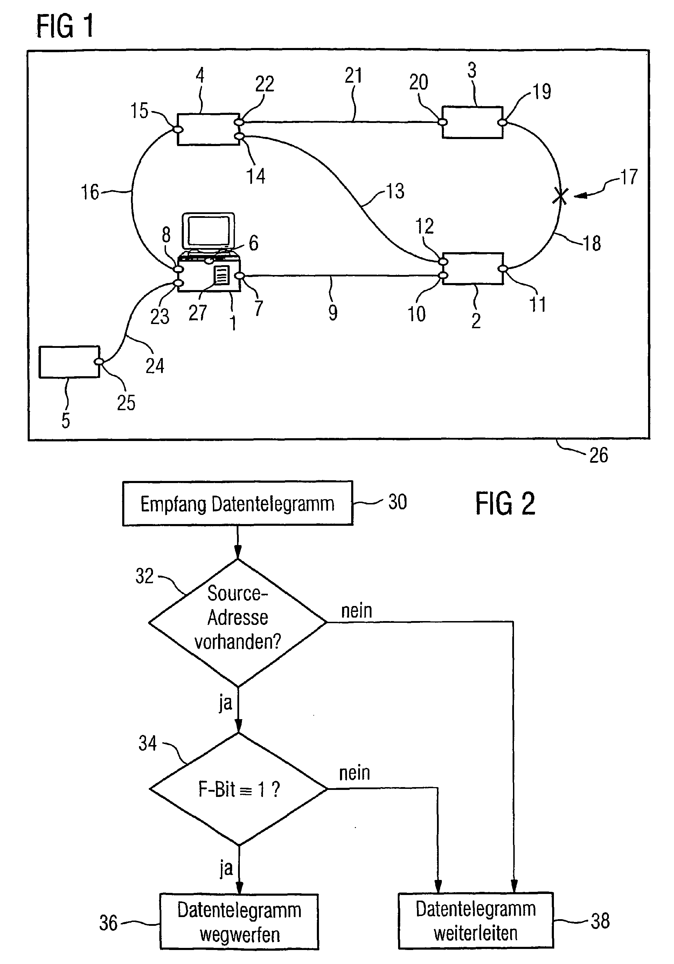

FIG 1 zeigt ein Blockschaltbild eines Ausführungsbeispiels eines erfindungsgemäßen Kommunikationssystems 26. Das gezeigte Kommunikationssystem 26 stellt beispielsweise ein verteiltes, echtzeitkritisches Automatisierungssystem dar. Das vorliegende Kommunikationssystem 26 ist darüber hinaus ein geschaltetes Kommunikationsnetz, wobei es sich beispielsweise um ein Realtime Ethernet-System handelt. Das vorliegende Kommunikationssystem 26 ist ein zyklisch arbeitendes System, d.h., dass Datenübertragungen in einem oder mehreren Übertragungszyklen stattfinden.

Das gezeigte Kommunikationssystem 26 besteht aus mehreren Teilnehmern 1, 2, 3, 4 und 5, die gleichzeitig sowohl als Sender als auch als Empfänger von Datentelegrammen ausgeprägt sind. Die Teilnehmer 1, 2, 3, 4 und 5 können beispielsweise als Rechner, als sonstige Automatisierungsgeräte, z.B. als Antriebe, oder auch als separate Koppeleinheiten, also Switches, bevorzugt als Realtime Ethernet Switches, ausgeführt sein. Jeder der Teilnehmer 1, 2, 3, 4, 5 des Kommunikationssystems 26 kann jedoch auch eine in den Teilnehmer integrierte Koppeleinheit, insbesondere einen Realtime Ethernet Switch aufweisen, wie dies beispielhaft für den Teilnehmer 1 dargestellt ist. Auf die Abbildung der übrigen integrierten Switches wurde aus Gründen der übersichtlichen Darstellung verzichtet. Die Switches dienen zum Einspeisen und/oder zum Empfangen und/oder zur Weiterleitung der zu übertragenden Datentelegramme, insbesondere der Datentelegramme, die zur redundanten Weiterleitung vorgesehen sind. Die Teilnehmer 1, 2, 3, 4, 5 werden auch als Netzknoten bezeichnet.

Jeder der Teilnehmer 1, 2, 3, 4, 5 des erfindungsgemäßen Kommunikationssystems 26 weist eine Adresstabelle auf, von denen der Übersichtlichkeit nur die Adresstabelle 27 des Teilnehmers 1 dargestellt und bezeichnet wurde. Jeder der Teilnehmer 1, 2, 3, 4, 5 weist darüber hinaus mehrere Ports auf, von denen jeweils zwei Ports potenziell für redundanten Datenverkehr vorgesehen sind. Alle anderen Ports des jeweiligen Teilnehmers sind potenziell nicht für redundanten Datenverkehr vorgesehen. Aus Gründen der Übersichtlichkeit sind nicht alle Ports, mit denen jeder der Teilnehmer 1, 2, 3, 4, 5 ausgestattet ist, dargestellt. So weist Teilnehmer 1 beispielhaft den für redundanten Datenverkehr vorgesehenen Port 8 auf, sowie die Ports 7 und 23, die nicht für den redundanten Datenverkehr vorgesehen sind. Insbesondere der Teilnehmer 1 stellt einen Netzknoten, beispielsweise ein Automatisierungsgerät, mit einem integrierten Switch dar. Dies ist durch die lokale Schnittstelle 6 des Teilnehmers 1 symbolisiert. Eine lokale Schnittstelle, insbesondere die lokale Schnittstelle 6 ist immer einer der weiteren Ports eines Teilnehmers, die potenziell nicht für den redundanten Datenverkehr vorgesehen sind. Teilnehmer 2 weist beispielhaft drei Ports auf, von denen der Port 10 nicht für redundanten Datenverkehr vorgesehen ist. Die Ports 11 und 12 sind die beiden Ports des Teilnehmers 2, die für den redundanten Datenverkehr potenziell vorgesehen sind. Teilnehmer 2 ist dabei über den Port 10 mit der Netzwerkverbindung 9 mit dem Port 7 und damit dem Teilnehmer 1 verbunden. Teilnehmer 5 ist nur mit dem Port 25 dargestellt, der für nicht redundanten Datenverkehr vorgesehen ist. Der Teilnehmer 5 ist über den Port 25 und der Netzwerkverbindung 24 mit dem Port 23 und damit dem Teilnehmer 1 verbunden. Teilnehmer 4 weist beispielhaft drei Ports 14, 15 und 22 auf, von denen die Ports 14 und 15 die beiden Ports des Teilnehmers 4 sind, welche für den redundanten Datenverkehr potenziell vorgesehen sind, und Port 22 einen der weiteren Ports des Teilnehmers 4 darstellt, der nicht für den redundanten Datenverkehr vorgesehen ist. Teilnehmer 4 ist über den Port 15 und der Netzwerkverbindung 16 mit dem Port 8 des Teilnehmers 1 verbunden. Weiterhin ist der Teilnehmer 4 über den Port 14 und der Netzwerkverbindung 13 mit dem Port 12 des Teilnehmers 2 verbunden. Des Weiteren weist der Teilnehmer 3 beispielhaft zwei Ports 19 und 20 auf, von denen der Port 20 nicht für den redundanten Datenverkehr vorgesehen ist und über den der Teilnehmer 3 mittels der Netzwerkverbindung 21 mit dem Port 22 des Teilnehmers 4 verbunden ist. Der Port 19 des Teilnehmers 3 ist dagegen für den redundanten Datenverkehr vorgesehen, wobei der Teilnehmer 3 über den Port 19 und den redundanten Netzwerkpfad 18, der eine logische Auftrennung 17 aufweist, mit dem Port 11 des Teilnehmers 2 verbunden ist. Der Begriff "Netzwerkverbindung" und der Begriff "Netzwerkpfad" sollen im Folgenden die gleiche Bedeutung haben. Ein Netzwerkpfad mit einer logischen Unterbrechung 17, wie beispielsweise der Netzwerkpfad 18, wird im Folgenden auch als redundanter Netzwerkpfad oder kurz redundanter Pfad bezeichnet. Wie bereits erwähnt, sind genau ein Portpaar eines jeden Netzteilnehmers, insbesondere Switches, als Träger redundanten Datenverkehrs gekennzeichnet. Sie werden beispielsweise als R-Ports bezeichnet. Alle übrigen Ports eines Teilnehmers sind als nicht für den redundanten Datenverkehr vorgesehen und entsprechend gekennzeichnet. Sie werden deshalb auch kurz als nR-Ports bezeichnet. Die lokale Schnittstelle eines in einem Gerät integrierten Switch, beispielsweise Port 6 von Teilnehmer 1, ist ebenfalls ein nR-Port.

In dem gezeigten beispielhaften Kommunikationssystem, welches insbesondere zur Echtzeitkommunikation geeignet ist, werden sowohl Datentelegramme übertragen, die zur redundanten Weiterleitung vorgesehen sind, sogenannte R-Telegramme, als auch Datentelegramme übertragen, die nicht zur redundanten Weiterleitung vorgesehen sind, sogenannte nR-Telegramme. Datentelegramme, die zur redundanten Weiterleitung vorgesehen sind, sind beispielsweise kritische, insbesondere zeitkritische bzw. echtzeitkritische, Datentelegramme, die zu einem bestimmten Zeitpunkt bei einem bestimmten Teilnehmer eingetroffen sein müssen, beispielsweise bei Teilnehmer 3. Eingespeist werden solche Datentelegramme beispielsweise über den nR-Port 6 von Teilnehmer 1. Selbstverständlich können jedoch auch beliebige andere Telegramme, die als wichtig bzw. kritisch angesehen werden, zur redundanten Weiterleitung vorgesehen sein. Diese Datentelegramme werden beispielsweise beim Einspeisen in das Kommunikationsnetz 26 über den nR-Port 6 von Teilnehmer 1 entsprechend gekennzeichnet. Eine solche Kennzeichnung kann beispielsweise durch eine besondere Header-Kennung gewährleistet werden. Diese so gekennzeichneten Datentelegramme besitzen die Eigenschaft, dass sie die logische Auftrennung 17 eines Netzwerkpfades 18 ignorieren und diese trotz der logischen Auftrennung 17 benutzen können. Andere Datentelegramme, die nicht zur redundanten Weiterleitung vorgesehen sind, die also auch nicht entsprechend gekennzeichnet sind, können einen solchen Netzwerkpfad 18 mit einer logischen Auftrennung 17 dagegen nicht benutzen. Fällt in dem vorliegenden Beispiel beispielsweise die Netzwerkverbindung 21 durch eine Unterbrechung aus, so wäre der Teilnehmer 3 vom Rest des Kommunikationssystems abgeschnitten. Durch die Verbindung mit dem Teilnehmer 2 über den redundanten Netzwerkpfad 18 ist es jedoch möglich, dass Datentelegramme, die zur redundanten Weiterleitung vorgesehen sind, den Teilnehmer 3 nach wie vor erreichen können.

Beim Einspeisen von Datentelegrammen in das Kommunikationssystem 26, beispielsweise über den nR-Port 6 des Teilnehmers 1, wird ein Eintrag in der entsprechenden Adresstabelle 27 des Teilnehmers 1 vorgenommen. Beim Einspeisen oder beim Empfang eines Datentelegramms, das nicht zur redundanten Weiterleitung vorgesehen ist, erfolgt ein "Lernen" der jeweiligen Absendeadresse des eingespeisten bzw. empfangenen Datentelegramms. Beim "Lernen" wird in der jeweiligen Adresstabelle des entsprechenden empfangenden Teilnehmers die Adresse des Absenders des empfangenen Datentelegramms und der Port des Teilnehmers eingetragen, über den das jeweilige Datentelegramm empfangen wurde. Bei einem Datentelegramm, das zur redundanten Weiterleitung vorgesehen ist, wird ein solches "Lernen" nicht durchgeführt. In diesem Fall wird lediglich die Adresse des Absenders sowie eine zusätzliche Markierung, beispielsweise das Setzen eines Filterbits, in der jeweiligen Adresstabelle, beispielsweise Adresstabelle 27, vorgenommen. Bei einem solchen R-Telegramm wird dagegen nicht der Port des Teilnehmers eingetragen, über den das entsprechende R-Telegramm empfangen worden ist.

Unabdingbare Voraussetzung für eine permanente redundante Übertragung von Datentelegrammen auf disjunkten Pfaden ist, dass zirkulierende Datentelegramme zuverlässig erkannt und vernichtet werden können. Dazu ist für eine sichere Erkennung zwingend erforderlich, dass am Einspeisepunkt der Datentelegramme, die zur redundanten Weiterleitung vorgesehen sind, die jeweilige Absendeadresse, auch MAC-Source-Adresse oder kurz Source-Adresse genannt, zusammen mit einer zusätzlichen Markierung, beispielsweise dem gesetzten Filterbit, in der Adresstabelle des jeweiligen einspeisenden Teilnehmers hinterlegt werden. Das erfindungsgemäße Verfahren zur sicheren Erkennung und Vernichtung solcher zirkulierenden Datentelegramme wird anhand der Beschreibung der Figuren 2, 3 und 4 näher erläutert.

FIG 2 zeigt den Empfang eines R-Telegramms an einem redundanten Empfangsport sowie die daran sich anschließenden Aktivitäten, insbesondere die Prüfung auf Zirkulation, d.h. ob das empfangene R-Telegramm ein zirkulierendes Telegramm ist. Schritt 30 symbolisiert den Empfang eines R-Telegramms an einem Port eines Teilnehmers, der prinzipiell für redundanten Datenverkehr vorgesehen ist, also einem so genannten R-Port. Nach dem Empfang des R-Datentelegramms wird mit dessen Source-Adresse die entsprechende Adresstabelle des empfangenden Teilnehmers im Schritt 32 dahingehend überprüft, ob die Absendeadresse des empfangenen R-Telegramms bereits in der Adresstabelle vorhanden ist. Wird die Source-Adresse gefunden, wird im Schritt 34 überprüft, ob zu dem gültigen Adresseintrag beispielsweise das zugehörige Filterbit auf den Wert 1 gesetzt ist. Ist auch dies der Fall, bedeutet das, dass das entsprechende R-Telegramm bei dem betreffenden Teilnehmer bereits einmal empfangen worden ist, dass es sich also um den Einspeisepunkt des Telegramms in das Kommunikationssystem, d.h., um ein zirkulierendes Datentelegramm handelt. Das betreffende R-Telegramm wird folglich im Schritt 36 weggeworfen. Ist dagegen gemäß Überprüfung im Schritt 34 entweder das entsprechende Filterbit nicht auf den Wert 1 gesetzt, oder ist gemäß Überprüfung im Schritt 32 kein gültiger Adresseintrag des empfangenen R-Telegramms in der entsprechenden Adresstabelle vorhanden, so wird das entsprechende R-Telegramm über den zur Weiterleitung vorgesehenen Port des Teilnehmers weitergeleitet und ggf. vorher dupliziert. Zur Erläuterung des Dupliziervorgangs bzw. der Bedingungen, unter welchen eine Duplizierung eines R-Telegramms erfolgt, siehe Figurenbeschreibungen 5 bis 8. Die Prüfungen gemäß Schritt 32 bzw. Schritt 34 werden durchgeführt, bevor das R-Telegramm vollständig empfangen ist.

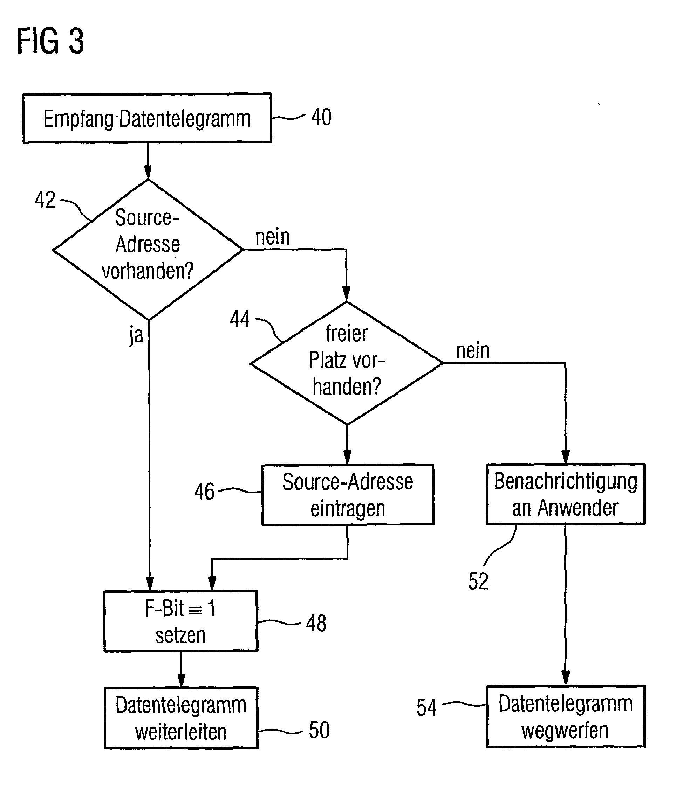

FIG 3 zeigt den Empfang eines R-Telegramms an einem nicht redundanten Empfangsport und die nachfolgenden Aktivitäten, insbesondere die Markierung des Einspeisepunktes eines R-Telegramms in das Kommunikationssystem. Schritt 40 symbolisiert den Empfang eines R-Telegramms an einem weiteren Port eines Teilnehmers, also an einem Port, der nicht für redundanten Datenverkehr vorgesehen ist, also einem so genannten nR-Port. Im Schritt 42 wird nach dem Empfang des R-Telegramms mit dessen Source-Adresse zunächst überprüft, ob die Adresse des Absenders des R-Telegramms in der entsprechenden Adresstabelle des Teilnehmers vorhanden ist. Ist ein solcher gültiger Adresseintrag, also die Absendeadresse, in der Adresstabelle vorhanden, so wird im Schritt 48 das zum Adresseintrag zugehörige F-Bit in der Adresstabelle des empfangenden Teilnehmers auf den Wert 1 gesetzt und anschließend im Schritt 50 das R-Telegramm über den dafür vorgesehenen Port weitergeleitet. Ist dagegen für das empfangene R-Telegramm noch keine Source-Adresse vorhanden, wie dies im Schritt 42 überprüft wird, so wird im Schritt 44 nachgesehen, ob in der Adresstabelle des entsprechenden Teilnehmers noch ein freier Speicherplatz für einen neuen Adresseintrag vorhanden ist. Ist ein solcher Speicherplatz vorhanden, so wird im Schritt 46 die Adresse des Absenders des empfangenen Datentelegramms, also die Source-Adresse, eingetragen und im Schritt 48 das zugehörige F-Bit auf den Wert 1 gesetzt, wodurch der Einspeisepunkt des R-Telegramms in das Kommunikationssystem gekennzeichnet wird, bevor das empfangene R-Telegramm im Schritt 50 über den dafür vorgesehenen Port weitergeleitet wird. Ist dagegen in der Adresstabelle weder eine gültige Source-Adresse, wie dies im Schritt 42 geprüft wird, noch ein freier Speicherplatz, wie dies im Schritt 44 geprüft wird, vorhanden, so erfolgt ein Interrupt, und es wird im Schritt 52 eine Benachrichtigung, insbesondere eine Fehlermeldung an den Anwender ausgegeben. Danach wird das R-Telegramm im Schritt 54 weggeworfen. Dieser Fall tritt beispielsweise bei der Einspeisung eines R-Telegramms über einen nR-Port auf, wobei dies einen seltenen Fehlerfall darstellt. Das entsprechende R-Telegramm wird dann, wie bereits erwähnt, nicht weitergeleitet und der Anwender wird davon via Interrupt benachrichtigt. Es kann dann eine Rekonfiguration der Adresstabelle durchgeführt werden, wodurch freie Speicherplätze geschaffen werden können. Das entsprechende R-Telegramm darf in diesem Fehlerfall nicht weitergeleitet werden, da das R-Telegramm als potenziell zirkulierendes Datentelegramm nicht mehr zweifelsfrei detektiert werden kann, da keine Sourceadresse und kein gesetztes F-Bit in der Adresstabelle des einspeisenden Teilnehmers hinterlegt werden kann.

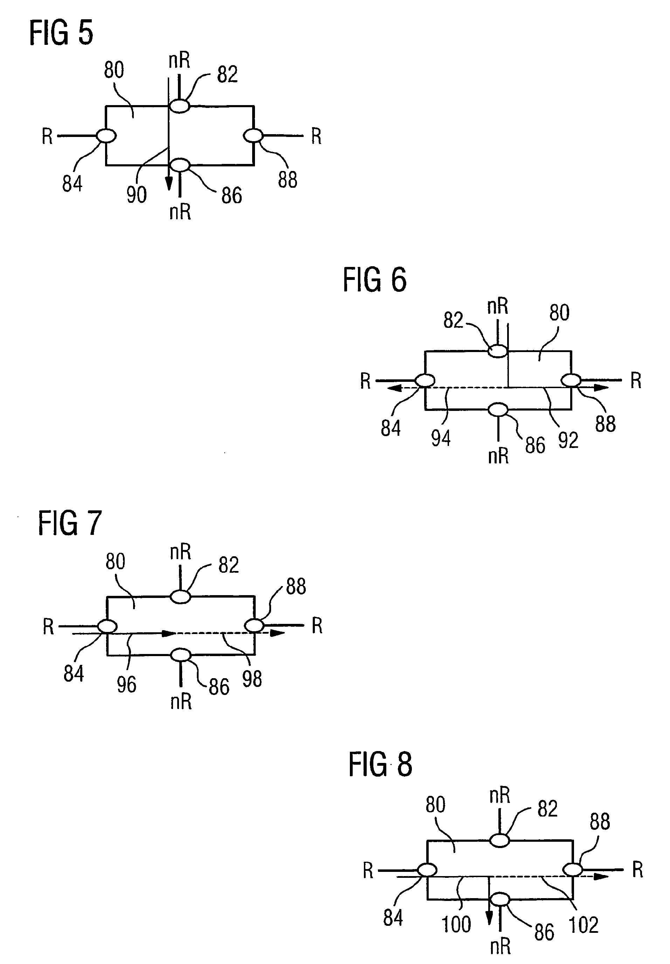

Abgesehen von dem oben beschriebenen Fehlerfall, wird beim Weiterleiten eines solchen R-Telegramms auch in den in der FIG 3 beschriebenen Fällen ggf. eine Duplizierung des R-Telegramms durchgeführt, dessen Bedingungen bzw. dessen Ablauf in der Beschreibung der Figuren 5 bis 8 erläutert wird.

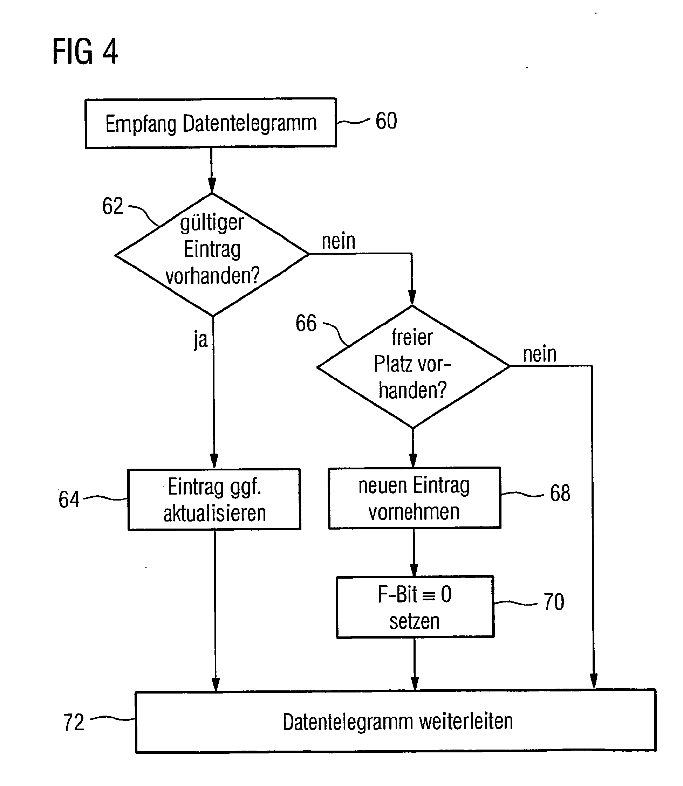

FIG 4 zeigt den Empfang eines Datentelegramms, das nicht zur redundanten Weiterleitung vorgesehen ist, also eines nR-Telegramms, an einem beliebigen Empfangsport, also sowohl bei Empfang an einem R-Port als auch bei Empfang an einem nR-Port. Bevor die nach dem Empfang folgenden Schritte durchgeführt werden, muß das nR-Telegramm allerdings erst vollständig empfangen werden, damit sicher gestellt werden kann, dass es sich nicht um ein fehlerhaftes Telegramm handelt (Cyclical Redundancy Check - CRC-Prüfung). Schritt 60 symbolisiert den Empfang eines solchen nR-Telegramms. Im Schritt 62 wird anschließend geprüft, ob die Adresse des Absenders des empfangenen nR-Telegramms in der Adresstabelle vorhanden ist und der Eintrag gültig ist, ob also die entsprechende Adresse bereits "gelernt" wurde. Ist ein solcher Eintrag vorhanden und gültig, so wird im Schritt 64 der entsprechende Eintrag ggf. aktualisiert. Eine Aktualisierung des entsprechenden Eintrags ist beispielsweise für den Fall notwendig, dass das empfangene nR-Telegramm über einen anderen Port empfangen wurde als in der Adresstabelle eingetragen. Anschließend wird das nR-Telegramm im Schritt 72 über den dafür vorgesehenen Port des Teilnehmers weitergeleitet. Ist dagegen in der Adresstabelle des empfangenden Teilnehmers noch keine gültige Source-Adresse vorhanden, wie dies im Schritt 62 geprüft wird, so wird im Schritt 66 geprüft, ob ein freier Speicherplatz in der Adresstabelle des entsprechenden Teilnehmers vorhanden ist. Ist das der Fall, wird im Schritt 68 ein neuer Eintrag in der Adresstabelle vorgenommen, die Source-Adresse des nR-Telegramms wird "gelernt". Dies bedeutet, dass die Adresse des Absenders des empfangenen nR-Telegramms und der Port, über den das nR-Telegramm empfangen wurde, in der Adresstabelle des Teilnehmers eingetragen wird. Zusätzlich wird im Schritt 70 das Filterbit des entsprechenden Speicherplatzes auf 0 gesetzt, worauf das nR-Telegramm im Schritt 72 entsprechend weitergeleitet wird. Ist in der Adresstabelle weder ein gültiger Eintrag vorhanden, wie dies im Schritt 62 geprüft wird, noch ein freier Speicherlatz vorhanden, wie dies im Schritt 66 geprüft wird, so wird das empfangene nR-Telegramm im Schritt 72 ohne weitere Aktionen entsprechend weitergeleitet.

Die Figuren 5, 6, 7 und 8 zeigen mögliche Szenarien beim erfindungsgemäßen Durchleiten, Weiterleiten bzw. Duplizieren von Datentelegrammen, die als zur redundanten Weiterleitung vorgesehen gekennzeichnet sind.

FIG 5 zeigt einen Teilnehmer 80 mit beispielsweise 2 Ports, die für nicht redundanten Datenverkehr vorgesehen sind, Port 82 und Port 86, sowie zwei Ports, die für den redundanten Datenverkehr vorgesehen sind, Port 84 und 88. In der Figur 5 wird das R-Telegramm 90 beispielsweise über den Port 82 empfangen und soll über den Port 86 weitergeleitet werden. Da es sich sowohl bei dem Port, über den das R-Telegramm 90 empfangen worden ist, als auch bei dem Port, über den das R-Telegramm weitergeleitet wird, um nR-Ports handelt, erfolgt keine weitere Aktion, das R-Telegramm 90 wird durch den Teilnehmer 80 durchgeleitet.

FIG 6 zeigt den gleichen Teilnehmer 80 mit denselben Bezeichnungen wie aus der FIG 5 bereits bekannt. Der empfangende Port ist wiederum der nR-Port 82. Der Port, über den das empfangene R-Telegramm 92 weitergeleitet werden soll, ist jedoch in diesem Fall der R-Port 88, der zur Weiterleitung redundanten Datenverkehrs vorgesehen ist. In diesem Fall wird erfindungsgemäß das empfangene R-Telegramm 92 automatisch dupliziert und als R-Telegramm 94 über den zweiten R-Port 84 zusätzlich weitergeleitet, so dass eine Aufspaltung des ursprünglichen R-Telegramms 92 auf zwei Telegramme erfolgt ist. Das duplizierte R-Telegramm 94 ist dabei eine exakte Kopie des ursprünglichen R-Telegramms 92 und deshalb auch nicht von diesem zu unterscheiden. Dadurch wird eine redundante Übertragung des empfangenen R-Telegramms 92 erreicht.

FIG 7 zeigt den gleichen Teilnehmer 80 mit denselben Bezeichnungen, wie bereits aus den Figuren 5 und 6 bekannt, nur, dass in diesem Fall das R-Telegramm 96 über den R-Port 84, empfangen wird. Das empfangene R-Telegramm 96 wird in diesem Fall automatisch über den Port 88 als R-Telegramm 98 weitergeleitet.

FIG 8 zeigt den gleichen Teilnehmer 80 mit den gleichen Bezeichnungen, wie bereits aus den Figuren 5, 6 und 7 bekannt. In diesem Fall wird das R-Telegramm 100 über den R-Port 84 empfangen und soll über den nR-Port 86 weitergeleitet werden. In diesem Fall wird das R-Telegramm 100 automatisch dupliziert und parallel über den R-Port 88 des Teilnehmers 80 zusätzlich als R-Telegramm 102 weitergeleitet. Auch in diesem Fall ist erfindungsgemäß eine Aufspaltung des empfangenen R-Telegramms 100 zur redundanten Weiterleitung vorgesehen.

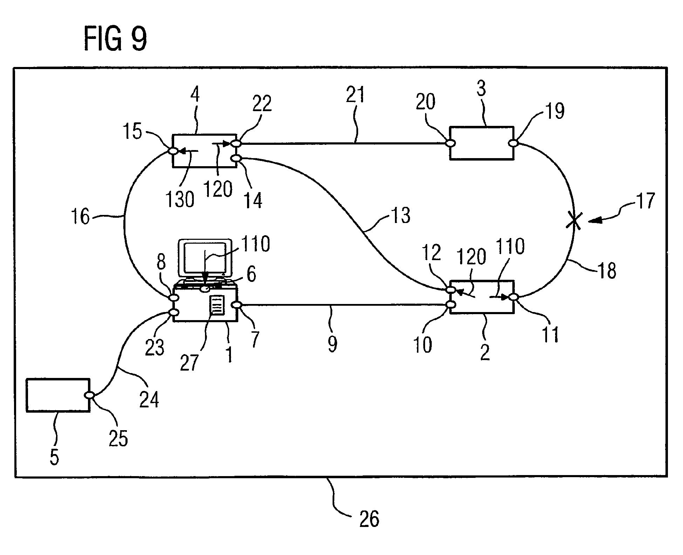

FIG 9 zeigt beispielhaft ein Ausführungsbeispiel des erfindungsgemäßen Verfahrens. Dazu wird auf das zyklische Kommunikationssystem 26 mit sämtlichen identischen Bezeichnungen aus der FIG 1 zurückgegriffen. Beispielhaft wird ein R-Telegramm 110 über die lokale Schnittstelle, den nR-Port 6, des Teilnehmers 1 in das Kommunikationssystem 26 eingespeist. Dabei bekommt das R-Telegramm 110 die Zyklusnummer des aktuellen Kommunikationszyklus zugewiesen. Der Empfänger des R-Telegramms 110 soll der Teilnehmer 3, beispielsweise ein Automatisierungsgerät, insbesondere eine Steuerung, sein. Nach dem Einspeisen des R-Telegramms 110 über den nR-Port 6 wird in der Adresstabelle 27 des Teilnehmers 1 ein entsprechender Eintrag generiert, der aus der Absendeadresse des R-Telegramms, also der Adresse des Teilnehmers 1 und dem zugehörigen, auf den Wert 1 gesetzten F-Bit besteht. Das R-Telegramm 110 ist zur Weiterleitung über den nR-Port 7 des Teilnehmers 1 vorgesehen und wird anschließend über die Netzwerkverbindung 9 und den nR-Port 10 an den Teilnehmer 2 weitergeleitet. Im Teilnehmer 1 erfolgt keine Duplizierung, da einspeisender und weiterleitender Port jeweils nR-Ports sind.

Im Teilnehmer 2 ist das R-Telegramm 110 zur Weiterleitung über den R-Port 11 vorgesehen. Da der empfangende Port 10 des Teilnehmers 2 ein nR-Port ist und der weiterleitende Port 11 ein R-Port ist, wird das R-Telegramm 110 automatisch dupliziert. Dabei wird das ursprüngliche R-Telegramm 110 weiter über den R-Port 11 und den redundanten Pfad 18 mit der logischen Auftrennung 17 zum R-Port 19 des Teilnehmers 3, also dem vorgesehenen Empfänger, weitergeleitet. Dort wird das Telegramm entsprechend verarbeitet, d.h., dass zunächst die Zyklusnummer des aktuellen Kommunikationszyklus, die im R-Telegramm 110 gespeichert ist, vom Teilnehmer 3 abgespeichert wird.

Während das R-Telegramm 110 über den R-Port 11 an den Teilnehmer 3 weitergeleitet worden ist, ist das duplizierte R-Telegramm 120 automatisch über den zweiten R-Port 12 des Teilnehmers 2 und die Netzwerkverbindung 13 an den R-Port 14 des Teilnehmers 4 weitergeleitet worden. Das R-Telegramm 120 wird vom Teilnehmer 4 über den nR-Port 22 und die Netzwerkverbindung 21 an den nR-Port 20 des Empfängers, Teilnehmers 3 weitergeleitet. Beim Empfang des R-Telegramms 120 durch den Teilnehmer 3, wird vom Teilnehmer 3 zunächst die Zyklusnummer des über den nR-Port 20 ankommenden duplizierten R-Telegramms 120 überprüft, und nachdem das originale R-Telegramm 110 im Teilnehmer 3 bereits eingetroffen und dessen Daten vom Teilnehmer 3 übernommen worden sind, hat eine Aktualisierung der entsprechenden Daten im aktuellen Kommunikationszyklus bereits stattgefunden, die von Teilnehmer 3 abgespeicherte aktuelle Zyklusnummer stimmt also mit der Zyklusnummer des empfangenen duplizierten R-Telegramms 120 überein. Die Daten des duplizierten R-Telegramms 120, das ja eine exakte Kopie des R-Telegramms 110 darstellt, wird deshalb von Teilnehmer 3 vernichtet.

Da beim Empfang des duplizierten R-Telegramms 120 im Teilnehmer 4 der empfangende Port 14 ein R-Port und der zur Weiterleitung des R-Telegramms 120 vorgesehene Port 22 ein nR-Port ist, wird parallel dazu automatisch eine weitere Duplizierung des R-Telegramms 120 durchgeführt, wobei das duplizierte R-Telegramm 130 automatisch über den zweiten R-Port 15 des Teilnehmers 4 mittels der Netzwerkverbindung 16 über den R-Port 8 an den Teilnehmer 1 weitergeleitet wird.

Beim Empfang eines R-Telegramms über einen R-Port, in diesem Fall des R-Telegramms 130 über den R-Port 8 des Teilnehmers 1, wird erfindungsgemäß in der jeweiligen Adresstabelle, hier in der Adresstabelle 27 des Teilnehmers 1, überprüft, ob die Absendeadresse des empfangenen R-Telegramms, hier R-Telegramm 130, bereits vorhanden ist. Dies ist hier der Fall, da das empfangene R-Telegramm 130 eine Kopie des ursprünglichen R-Telegramms 110 ist. Des Weiteren ist auch das Filter-Bit auf den Wert 1 gesetzt, da das R-Telegramm 110 beim Teilnehmer 1 über den nR-Port 6 in das Kommunikationssystem 26 eingespeist wurde. Dadurch kann der Teilnehmer 1 das R-Telegramm 130 eindeutig als zirkulierendes Datentelegramm identifizieren und das R-Telegramm 130 vernichten.

Das erfindungsgemäße Verfahren setzt kein Store-and-Forward-Verfahren der Datentelegramme in den Switches voraus, Datentelegramme können auch schnellstmöglich im Cut-through-Verfahren weitergeleitet werden. Zur sicheren Vernichtung von verfälschten zirkulierenden Datentelegrammen muss lediglich ein einziger Switch innerhalb eines Kommunikationssystems, insbesondere einer Ringanordnung, beispielsweise Kommunikationssystem 26, im Store-and-Forward-Modus arbeiten.

Zusammengefasst ist mit dem erfindungsgemäßen Verfahren eine permanente redundante Übertragung von Datentelegrammen auf disjunkten Pfaden möglich, wobei zirkulierende Datentelegrammeelegramme zuverlässig erkannt und vernichtet werden können. Darüber hinaus erfolgt die Aufspaltung auf zwei Datentelegramme an der entsprechenden Verzweigungsstelle transparent, und es entsteht beim Empfänger keine zusätzliche Belastung durch den Empfang zweier identischer Datentelegramme, beispielsweise durch die Zuordnung einer aktuellen Zyklusnummer zu den empfangenen Datentelegrammen in einem zyklischen Kommunikationssystem 26. In einem nicht zyklischen Kommunikationssystem kann dies durch softwaretechnische Behandlung, beispielsweise der Headerkennung der Datentelegramme, ebenfalls gewährleistet werden. Insbesondere wird darüber hinaus das Verhalten des Kommunikationssystems 26 hinsichtlich "Lernen" von Adressen in den einzelnen Teilnehmern 1,2,3,4,5, insbesondere den Switches, für den gesamten übrigen, nicht redundanten Datenverkehr nicht verändert.

## Patentansprüche

1. Verfahren zum Einspeisen und/oder zum Empfang und/oder zur Weiterleitung von Datentelegrammen in einem Kommunikationssystem (26), insbesondere zur Echtzeitkommunikation, mit mehreren Teilnehmern (1,2,3,4,5), die mittels Netzwerkpfaden (9,13,16,18,21,24) miteinander verbunden sind, wobei jeder Teilnehmer (1,2,3,4,5) als Sender und/oder Empfänger von Datentelegrammen ausgeprägt und mit einer eindeutigen Adresse ausgestattet ist, wenigstens einen ersten (12,15,19) und einen zweiten Port (8,11,14) zum Empfang und/oder zur Weiterleitung und wenigstens einen weiteren Port (6,7,10,20,22, 23,25) zum Einspeisen und/oder zum Empfang und/oder zur Weiterleitung von Datentelegrammen, die zur redundanten Weiterleitung vorgesehen sind, und eine Adresstabelle zur Speicherung wenigstens einer Absendeadresse eines eingespeisten Datentelegramms aufweist und wobei das Kommunikationssystem (26) wenigstens einen Netzwerkpfad (18) mit einer logischen Unterbrechung (17) aufweist, mit folgenden Schritten:
- Kennzeichnung von Datentelegrammen, die zur redundanten Weiterleitung vorgesehen sind,
- Einspeisung der Datentelegramme, die zur redundanten Weiterleitung vorgesehen sind, in das Kommunikationssystem (26) an einem der weiteren Ports (6,7,10,20,22,23,25) eines Teilnehmers (1,2,3,4,5),
- Duplizieren eines der Datentelegramme, die zur redundanten Weiterleitung vorgesehen sind, bei einem Teilnehmer (1,2,3,4,5),
beim Empfang des Datentelegramms über den ersten (12,15,19) oder zweiten Port (8,11,14) und Weiterleitung über einen weiteren Port (6,7,10,20,22,23,25) des Teilnehmers (1,2,3,4,5),
oder
beim Empfang des Datentelegramms über einen weiteren Port (6,7,10,20,22,23,25) und Weiterleitung über den ersten (12,15,19) oder zweiten Port (8,11,14) des Teilnehmers (1,2,3,4,5),
- Weiterleitung eines duplizierten Datentelegramms über den ersten Port (12,15,19) des Teilnehmers (1,2,3,4,5) bei Empfang oder Weiterleitung eines Datentelegramms, das zur redundanten Weiterleitung vorgesehen ist, über den zweiten Port (8,11,14) des Teilnehmers (1,2,3,4,5),
- Weiterleitung eines duplizierten Datentelegramms über den zweiten Port (8,11,14) des Teilnehmers (1,2,3,4,5) bei Empfang oder Weiterleitung eines Datentelegramms, das zur redundanten Weiterleitung vorgesehen ist, über den ersten Port (12,15,19) des Teilnehmers (1,2,3,4,5),
**dadurch gekennzeichnet,**
**dass** das Kommunikationssystem (26) zyklisch arbeitet,
**dass** einem Datentelegramm, das als zur redundanten Weiterleitung vorgesehen gekennzeichnet ist, beim Einspeisen in das Kommunikationssystem (26) eine aktuelle Zyklusnummer zugewiesen wird und
**dass** der Empfänger eines Datentelegramms, das als zur redundanten Weiterleitung vorgesehen gekennzeichnet ist, die aktuelle Zyklusnummer des empfangenen Datentelegramms abspeichert.

2. Verfahren nach Anspruch 1,
**dadurch gekennzeichnet,**
**dass** Datentelegramme, die zur redundanten Weiterleitung vorgesehen sind, mit einer eindeutigen Header-Kennung gekennzeichnet werden.

3. Verfahren nach einem der Ansprüche 1 oder 2,
**dadurch gekennzeichnet,**
**dass** der Netzwerkpfad (18) mit einer logischen Unterbrechung (17) nur von den Datentelegrammen, die als zur redundanten Weiterleitung vorgesehene Datentelegramme gekennzeichnet sind, benutzt wird.

4. Verfahren nach einem der vorherigen Ansprüche,
**dadurch qekennzeichnet,**
**dass** beim Einspeisen eines Datentelegramms, das als zur redundanten Weiterleitung vorgesehen gekennzeichnet ist, in das Kommunikationssystem (26) an einem der weiteren Ports (6,7,10,20,22,23,25) eines Teilnehmers (1,2,3,4,5), die Absendeadresse des Teilnehmers (1,2,3,4,5), der das Datentelegramm in das Kommunikationssystem (26) einspeist, und eine zusätzliche Markierung in der Adresstabelle des einspeisenden Teilnehmers (1,2,3,4,5) eingetragen wird.

5. Verfahren nach Anspruch 4,
**dadurch gekennzeichnet,**
**dass** die zusätzliche Markierung aus einem Bit besteht, welches zwei Werte, 0 oder 1, annehmen kann.

6. Verfahren nach einem der vorherigen Ansprüche,
**dadurch gekennzeichnet,**
**dass** beim Empfang eines Datentelegramms, das als zur redundanten Weiterleitung vorgesehen gekennzeichnet ist, an einem der weiteren Ports (6,7,10,20,22,23,25) eines Teilnehmers (1,2,3,4,5), überprüft wird, ob die Adresstabelle des empfangenden Teilnehmers einen Eintrag mit der Absendeadresse des Teilnehmers (1,2,3,4,5), der das Datentelegramm in das Kommunikationssystem (26) eingespeist hat, und einer zusätzlichen Markierung aufweist,
wobei die Absendeadresse des Teilnehmers (1,2,3,4,5), der das Datentelegramm in das Kommunikationssystem (26) eingespeist hat, und/oder eine zusätzliche Markierung in der Adresstabelle des empfangenden Teilnehmers (1,2,3,4,5) eingetragen und das betreffende Datentelegramm weitergeleitet wird, falls ein solcher Eintrag nicht vorhanden ist, oder,
wobei das betreffende Datentelegramm weitergeleitet wird, falls ein solcher Eintrag vorhanden ist.

7. Verfahren nach einem der vorherigen Ansprüche,
**dadurch gekennzeichnet,**
**dass** beim Empfang eines Datentelegramms, das als zur redundanten Weiterleitung vorgesehen gekennzeichnet ist, und/oder eines duplizierten Datentelegramms über den ersten (12,15,19) oder zweiten Port (8,11,14) eines Teilnehmers (1,2,3,4,5) überprüft wird, ob die Adresstabelle des empfangenden Teilnehmers einen Eintrag mit der Absendeadresse des Teilnehmers (1,2,3,4,5), der das betreffende Datentelegramm in das Kommunikationssystem (26) eingespeist hat, und einer zusätzlichen Markierung aufweist,
wobei das betreffende Datentelegramm und/oder das duplizierte Datentelegramm vernichtet wird, falls ein solcher Eintrag vorhanden ist, oder,
wobei das betreffende Datentelegramm und/oder das duplizierte Datentelegramm weitergeleitet wird, falls keine Absendeadresse oder eine Absendeadresse ohne zusätzliche Markierung vorhanden ist.

8. Verfahren nach einem der vorherigen Ansprüche,
**dadurch gekennzeichnet,**
**dass** der Empfänger eines Datentelegramms, das als zur redundanten Weiterleitung vorgesehen gekennzeichnet ist, beim Empfang des Datentelegramms die Zyklusnummer des empfangenen Datentelegramms mit der beim Empfänger abgespeicherten aktuellen Zyklusnummer vergleicht,
wobei der Empfänger die Daten des empfangenen Datentelegramms übernimmt, falls die beiden verglichenen Zyklusnummern nicht übereinstimmen, oder,
wobei der Empfänger die Daten des empfangenen Datentelegramms ignoriert und/oder das Datentelegramm vernichtet, falls die beiden verglichenen Zyklusnummern übereinstimmen.

9. Teilnehmer für ein Kommunikationssystem (26), insbesondere zur Echtzeitkommunikation, wobei der Teilnehmer (1,2,3,4,5) als Sender und/oder Empfänger von Datentelegrammen ausgeprägt und mit einer eindeutigen Adresse ausgestattet ist, wenigstens einen ersten (12,15,19) und einen zweiten Port (8,11,14) zum Empfang und/oder zur Weiterleitung und wenigstens einen weiteren Port (6,7,10,20,22, 23,25) zum Einspeisen und/oder zum Empfang und/oder zur Weiterleitung von Datentelegrammen, die zur redundanten Weiterleitung.vorgesehen sind, und eine Adresstabelle zur Speicherung wenigstens einer Absendeadresse eines eingespeisten Datentelegramms aufweist mit:
- Mitteln zur Kennzeichnung von Datentelegrammen, die zur redundanten Weiterleitung vorgesehen sind,
- Mitteln zur Einspeisung der Datentelegramme, die zur redundanten Weiterleitung vorgesehen sind, in das Kommunikationssystem (26) an einem der weiteren Ports (6,7,10,20,22,23,25),
- Mitteln zum Duplizieren eines der Datentelegramme, die zur redundanten Weiterleitung vorgesehen sind,
beim Empfang des Datentelegramms über den ersten (12,15,19) oder zweiten Port (8,11,14) und Weiterleitung über einen weiteren Port (6,7,10,20,22,23,25),
oder
beim Empfang des Datentelegramms über einen weiteren Port (6,7,10,20,22,23,25) und Weiterleitung über den ersten (12,15,19) oder zweiten Port (8,11,14),
- Mitteln zur Weiterleitung eines duplizierten Datentelegramms über den ersten Port (12,15,19) bei Empfang oder Weiterleitung eines Datentelegramms, das zur redundanten Weiterleitung vorgesehen ist, über den zweiten Port (8,11,14) und
- Mitteln zur Weiterleitung eines duplizierten Datentelegramms über den zweiten Port (8,11,14) bei Empfang oder Weiterleitung eines Datentelegramms, das zur redundanten Weiterleitung vorgesehen ist, über den ersten Port (12,15,19),
**dadurch gekennzeichnet,**
**dass** der Teilnehmer (1,2,3,4,5) Teilnehmer eines Kommunikationssystems (26) ist, wobei das Kommunikationssystem (26) zyklisch arbeitet,
**dass** der Teilnehmer (1,2,3,4,5) einem Datentelegramm, das als zur redundanten Weiterleitung vorgesehen gekennzeichnet ist, beim Einspeisen in das Kommunikationssystem (26) eine aktuelle Zyklusnummer zuweist und
**dass** der Teilnehmer (1,2,3,4,5), der Empfänger eines Datentelegramms ist, das als zur redundanten Weiterleitung vorgesehen gekennzeichnet ist, die aktuelle Zyklusnummer des empfangene Datentelegramms abspeichert.

10. Teilnehmer nach Anspruch 9,
**dadurch gekennzeichnet,**
**dass** der Teilnehmer (1,2,3,4,5) die Datentelegramme, die zur redundanten Weiterleitung vorgesehen sind, mit einer eindeutigen Header-Kennung kennzeichnet.

11. Teilnehmer nach einem der Ansprüche 9 oder 10,
**dadurch gekennzeichnet,**
**dass** der Teilnehmer (1,2,3,4,5) beim Einspeisen eines Datentelegramms, das als zur redundanten Weiterleitung vorgesehen gekennzeichnet ist, in das Kommunikationssystem (26) an einem der weiteren Ports (6,7,10,20,22,23,25), die Absendeadresse des einspeisenden Teilnehmers (1,2,3,4,5) und eine zusätzliche Markierung in der Adresstabelle des einspeisenden Teilnehmers (1,2,3,9,5) einträgt.

12. Teilnehmer nach einem der Ansprüche 9 bis 11,
**dadurch gekennzeichnet,**
**dass** der Teilnehmer (1,2,3,4,5) beim Empfang eines Datentelegramms, das als zur redundanten Weiterleitung vorgesehen gekennzeichnet ist, an einem der weiteren Ports (6,7,10,20,22,23,25), überprüft, ob die Adresstabelle des empfangenden Teilnehmers einen Eintrag mit der Absendeadresse des Teilnehmers (1,2,3,4,5), der das Datentelegramm in das Kommunikationssystem (26) eingespeist hat, und einer zusätzlichen Markierung aufweist,
wobei der empfangende Teilnehmer die Absendeadresse des Teilnehmers (1,2,3,4,5), der das Datentelegramm in das Kommunikationssystem (26) eingespeist hat, und/oder eine zusätzliche Markierung in der Adresstabelle einträgt und das betreffende Datentelegramm weiterleitet, falls ein solcher Eintrag nicht vorhanden ist, oder,
wobei der empfangende Teilnehmer (1,2,3,4,5) das betreffende Datentelegramm weiterleitet, falls ein solcher Eintrag vorhanden ist.

13. Teilnehmer nach einem der Ansprüche 9 bis 12,
**dadurch gekennzeichnet,**
**dass** der Teilnehmer (1,2,3,4,5) ein Datentelegramm, das als zur redundanten Weiterleitung vorgesehen gekennzeichnet ist, und/oder ein dupliziertes Datentelegramm beim Empfang über den ersten (12,15,19) oder zweiten Port (8,11,14) überprüft, ob die Adresstabelle des empfangenden Teilnehmers einen Eintrag mit der Absendeadresse des Teilnehmers (1,2,3,4,5), der das betreffende Datentelegramm in das Kommunikationssystem (26) eingespeist hat, und einer zusätzlichen Markierung aufweist,
wobei der empfangende Teilnehmer (1,2,3,4,5) das betreffende Datentelegramm und/oder das duplizierte Datentelegramm vernichtet, falls ein solcher Eintrag vorhanden ist, oder, wobei der empfangende Teilnehmer (1,2,3,4,5) das betreffende Datentelegramm und/oder das duplizierte Datentelegramm weiterleitet, falls keine Absendeadresse und/oder keine zusätzliche Markierung vorhanden ist.

14. Teilnehmer nach einem der Ansprüche 9 bis 13,
**dadurch gekennzeichnet,**
**dass** der Teilnehmer (1,2,3,4,5), der Empfänger eines Datentelegramms ist, das als zur redundanten Weiterleitung vorgesehen gekennzeichnet ist, beim Empfang des Datentelegramms die Zyklusnummer des empfangenen Datentelegramms mit der beim Empfänger abgespeicherten aktuellen Zyklusnummer vergleicht, wobei der Empfänger die Daten des empfangenen Datentelegramms übernimmt, falls die beiden verglichenen Zyklusnummern nicht übereinstimmen, oder,
wobei der Empfänger die Daten des empfangenen Datentelegramms ignoriert und/oder das Datentelegramm vernichtet, falls die beiden verglichenen Zyklusnummern übereinstimmen.

15. Teilnehmer nach einem der Ansprüche 9 bis 14,
**dadurch gekennzeichnet,**
**dass** der Teilnehmer (1,2,3,4,5) ein Netzknoten mit einer integrierten Koppeleinheit ist.

16. Teilnehmer nach Anspruch 15,
**dadurch gekennzeichnet,**
**dass** die integrierte Koppeleinheit ein Realtime Ethernet Switch ist.

17. Teilnehmer nach einem der Ansprüche 9 bis 16,
**dadurch gekennzeichnet,**
**dass** der Teilnehmer (1,2,3,4,5) ein Automatisierungsgerät ist.

18. Kommunikationssystem mit mehreren Teilnehmern nach einem der Ansprüche 9 bis 17.

19. Kommunikationssystem nach Anspruch 18,
**dadurch gekennzeichnet,**
**dass** das Kommunikationssystem wenigstens einen Netzwerkpfad (18) mit einer logischen Unterbrechung (17) aufweist, wobei der Netzwerkpfad (18) mit einer logischen Unterbrechung (17) nur von den Datentelegrammen, die als zur redundanten Weiterleitung vorgesehene Datentelegramme gekennzeichnet sind, benutzt wird.

20. Kommunikationssystem nach einem der Ansprüche 18 oder 19,
**dadurch gekennzeichnet,**
**dass** es sich bei dem Kommunikationssystem um ein geschaltetes Kommunikationssystem von einem Ethernet Typ oder einem Realtime Ethernet Typ handelt.

21. Kommunikationssystem nach einem der Ansprüche 18 bis 20,
**dadurch gekennzeichnet,**
**dass** das Kommunikationssystem ein Automatisierungssystem ist.

## Claims

1. Method for injecting and/or for receiving and/or for forwarding data telegrams in a communication system (26), particularly for the purpose of real-time communication, comprising a number of users (1, 2, 3, 4, 5) which are connected to one another by means of network paths (9, 13, 16, 18, 21, 24), wherein each user (1, 2, 3, 4, 5) is developed as transmitter and/or receiver of data telegrams and equipped with an unambiguous address, and has at least one first (12, 15, 19) and one second port (8, 11, 14) for receiving and/or for forwarding and at least one further port (6, 7, 10, 20, 22, 23, 25) for injecting and/or for receiving and/or for forwarding data telegrams which are provided for the redundant forwarding, and an address table for storing at least one sending address of an injected data telegram and wherein the communication system (26) has at least one network path (18) having a logical interruption (17), comprising the following steps:
- identifying data telegrams which are provided for the redundant forwarding,
- injecting the data telegrams, which are provided for the redundant forwarding, into the communication system (26) at one of the further ports (6, 7, 10, 20, 22, 23, 25) of a user (1, 2, 3, 4, 5),
- duplicating one of the data telegrams, which are provided for the redundant forwarding, at one user (1, 2, 3, 4, 5), on reception of the data telegram via the first (12, 15, 19) or second port (8, 11, 14) and forwarding via a further port (6, 7, 10, 20, 22, 23, 25) of the user (1, 2, 3, 4, 5),
or on reception of the data telegram via a further port (6, 7, 10, 20, 22, 23, 25) and forwarding via the first (12, 15, 19) or second port (8, 11, 14) of the user (1, 2, 3, 4, 5),
- forwarding of a duplicated data telegram via the first port (12, 15, 19) of the user (1, 2, 3, 4, 5) on reception or forwarding of a data telegram which is provided for the redundant forwarding, via the second port (8, 11, 14) of the user (1, 2, 3, 4, 5),
- forwarding of a duplicated data telegram via the second port (8, 11, 14) of the user (1, 2, 3, 4, 5) on reception or forwarding of a data telegram which is provided for the redundant forwarding, via the first port (12, 15, 19) of the user (1, 2, 3, 4, 5),
**characterized in that**
the communication system (26) operates cyclically,
**in that** a data telegram which is identified as provided for the redundant forwarding is assigned a current cycle number on injection into the communication system (26), and
**in that** the receiver of a data telegram, which is identified as provided for the redundant forwarding, stores the current cycle number of the received data telegram.

2. Method according to Claim 1, **characterized in that** data telegrams which are provided for the redundant forwarding are identified with an unambiguous header identifier.

3. Method according to either of Claims 1 and 2, **characterized in that** the network path (18) with a logical interruption (17) is only used by the data telegrams which are identified as provided for the redundant forwarding.

4. Method according to one of the preceding claims, **characterized in that** on injection of a data telegram, which is identified as provided for the redundant forwarding, into the communication system (26) at one of the further ports (6, 7, 10, 20, 22, 23, 25) of a user (1, 2, 3, 4, 5), the sending address of the user (1, 2, 3, 4, 5) which injects the data telegram into the communication system (26) and an additional marking is entered in the address table of the injecting user (1, 2, 3, 4, 5).

5. Method according to Claim 4, **characterized in that** the additional marking consists of one bit which can assume two values, 0 or 1.

6. Method according to one of the preceding claims, **characterized in that** on reception of a data telegram, which is identified as provided for the redundant forwarding, at one of the further ports (6, 7, 10, 20, 22, 23, 25) of a user (1, 2, 3, 4, 5), it is checked whether the address table of the receiving user has an entry with the sending address of the user (1, 2, 3, 4, 5) which has injected the data telegram into the communication system (26), and an additional marking wherein the sending address of the user (1, 2, 3, 4, 5) which has injected the data telegram into the communication system (26) and/or an additional marking is entered in the address table of the receiving user (1, 2, 3, 4, 5) and the relevant data telegram is forwarded if such an entry is not present, or wherein the relevant data telegram is forwarded if such an entry is present.

7. Method according to one of the preceding claims, **characterized in that** on reception of a data telegram which is identified as provided for the redundant forwarding and/or of a duplicated data telegram via the first (12, 15, 19) or second port (8, 11, 14) of a user (1, 2, 3, 4, 5), it is checked whether the address table of the receiving user has an entry with the sending address of the user (1, 2, 3, 4, 5), which has injected the relevant data telegram into the communication system (26), and an additional marking,
wherein the relevant data telegram and/or the duplicated data telegram is destroyed if such an entry is present, or
wherein the relevant data telegram and/or the duplicated data telegram is forwarded if no sending address or a sending address without additional marking is present.

8. Method according to one of the preceding claims, **characterized in that** the receiver of a data telegram which is identified as provided for the redundant forwarding, on reception of the data telegram, compares the cycle number of the received data telegram with the current cycle number stored at the receiver,
and wherein the receiver accepts the data of the received data telegram if the two compared cycle numbers do not correspond or wherein the receiver ignores the data of the received data telegram and/or destroys the data telegram if the two compared cycle numbers correspond.

9. User for a communication system (26), particularly for the purpose of real-time communication, wherein the user (1, 2, 3, 4, 5) is developed as transmitter and/or receiver of data telegrams and equipped with an unambiguous address, and has at least one first (12, 15, 19) and one second port (8, 11, 14) for receiving and/or for forwarding and at least one further port (6, 7, 10, 20, 22, 23, 25) for injecting and/or for receiving and/or for forwarding data telegrams which are provided for the redundant forwarding, and an address table for storing at least one sending address of an injected data telegram comprising
- means for identifying data telegrams which are provided for the redundant forwarding,
- means for injecting the data telegrams, which are provided for the redundant forwarding, into the communication system (26) at one of the further ports (6, 7, 10, 20, 22, 23, 25),
- means for duplicating one of the data telegrams, which are provided for the redundant forwarding,
on reception of the data telegram via the first (12, 15, 19) or second port (8, 11, 14) and forwarding via a further port (6, 7, 10, 20, 22, 23, 25), or
on reception of the data telegram via a further port (6, 7, 10, 20, 22, 23, 25) and forwarding via the first (12, 15, 19) or second port (8, 11, 14),
- means for forwarding a duplicated data telegram via the first port (12, 15, 19) on reception or forwarding of a data telegram which is provided for the redundant forwarding, via the second port (8, 11, 14) and
- means for forwarding a duplicated data telegram via the second port (8, 11, 14) on reception or forwarding of a data telegram which is provided for the redundant forwarding, via the first port (12, 15, 19),
**characterized in that**
the user (1, 2, 3, 4, 5) is user of a communication system (26), wherein the communication system (26) operates cyclically,
**in that** the user (1, 2, 3, 4, 5) assigns a current cycle number to a data telegram which is identified as provided for the redundant forwarding on injection into the communication system (26), and
**in that** the user (1, 2, 3, 4, 5) who is receiver of a data telegram, which is identified as provided for the redundant forwarding, stores the current cycle number of the received data telegram.

10. User according to Claim 9, **characterized in that** the user (1, 2, 3, 4, 5) identifies the data telegrams, which are provided for the redundant forwarding, with an unambiguous header identifier.

11. User according to either of Claims 9 and 10, **characterized in that** the user (1, 2, 3, 4, 5), on injection of a data telegram, which is identified as provided for the redundant forwarding, into the communication system (26) at one of the further ports (6, 7, 10, 20, 22, 23, 25), enters the sending address of the injecting user (1, 2, 3, 4, 5) and an additional marking in the address table of the injecting user (1, 2, 3, 4, 5).

12. User according to one of Claims 9 to 11, **characterized in that** the user (1, 2, 3, 4, 5), on reception of a data telegram, which is identified as provided for the redundant forwarding, at one of the further ports (6, 7, 10, 20, 22, 23, 25) checks whether the address table of the receiving user has an entry with the sending address of the user (1, 2, 3, 4, 5) which has injected the data telegram into the communication system (26), and an additional marking,
wherein the receiving user enters the sending address of the user (1, 2, 3, 4, 5) which has injected the data telegram into the communication system (26) and/or an additional marking in the address table and forwards the relevant data telegram if such an entry is not present, or
wherein the receiving user (1, 2, 3, 4, 5) forwards the relevant data telegram if such an entry is present.

13. User according to one of Claims 9 to 12, **characterized in that** the user (1, 2, 3, 4, 5) checks a data telegram which is identified as provided for the redundant forwarding and/or a duplicated data telegram on reception via the first (12, 15, 19) or second port (8, 11, 14) to see whether the address table of the receiving user has an entry with the sending address of the user (1, 2, 3, 4, 5), which has injected the relevant data telegram into the communication system (26), and an additional marking, wherein the receiving user (1, 2, 3, 4, 5) destroys the relevant data telegram and/or the duplicated data telegram if such an entry is present or, wherein the receiving user (1, 2, 3, 4, 5) forwards the relevant data telegram and/or the duplicated data telegram if no sending address and/or no additional marking is present.

14. User according to one of Claims 9 to 13, **characterized in that** the user (1, 2, 3, 4, 5) which is receiver of a data telegram which is identified as provided for the redundant forwarding, on reception of the data telegram, compares the cycle number of the received data telegram with the current cycle number stored at the receiver, wherein the receiver accepts the data of the received data telegram if the two compared cycle numbers do not correspond, or
wherein the receiver ignores the data of the received data telegram and/or destroys the data telegram if the two compared cycle numbers correspond.

15. User according to one of Claims 9 to 14, **characterized in that** the user (1, 2, 3, 4, 5) is a network node comprising an integrated switching unit.

16. User according to Claim 15, **characterized in that** the integrated switching unit is a real time Ethernet switch.

17. User according to one of Claims 9 to 16, **characterized in that** the user (1, 2, 3, 4, 5) is an automation device.

18. Communication system comprising a number of users according to one of Claims 9 to 17.

19. Communication system according to Claim 18, **characterized in that** the communication system has at least one network path (18) having a logical interruption (17), wherein the network path (18) having a logical interruption (17) is only used by the data telegrams which are identified as data telegrams provided for the redundant forwarding.

20. Communication system according to either of Claims 18 and 19, **characterized in that** the communication system is a switched communication system of an Ethernet type or of a real time Ethernet type.

21. Communication system according to one of Claims 18 to 20, **characterized in that** the communication system is an automation system.

## Revendications

1. Procédé d'injection et/ou de réception et/ou d'acheminement de télégrammes de données dans un système ( 26 ) de communication, notamment pour la communication en temps réel, comprenant plusieurs participants ( 1, 2, 3, 4, 5 ), qui sont reliés entre eux au moyen de trajets ( 9, 13, 16, 18, 21, 24 ) de réseau, chaque participant ( 1, 2, 3, 4, 5 ) étant marqué comme émetteur et/ou comme accepteur de télégrammes de données et étant muni d'une adresse univoque, comporte au moins un premier accès ( 12, 15, 19 ) et un deuxième accès ( 8, 11, 14 ) de réception et/ou d'acheminement et au moins un autre accès ( 6, 7, 10, 20, 22, 23, 25 ) d'injection et/ou de réception et/ou d'acheminement de télégrammes de données, qui sont prévus pour l'acheminement redondant, et une table d'adresse pour la mémorisation d'au moins une adresse d'envoi d'un télégramme de données injecté et dans lequel le système ( 26 ) de communication a au moins un trajet ( 8 ) de réseau ayant une interruption ( 17 ) logique, ayant les stades suivantes :
- on caractérise des télégrammes de données, qui sont prévus pour l'acheminement redondant,
- on injecte les télégrammes de données, qui sont prévus pour l'acheminement redondant, dans le système ( 26 ) de communication à l'un des autres accès ( 6, 7, 10, 20, 22, 23, 25 ) d'un participant ( 1, 2, 3, 4, 5 ),
- on duplique l'un des télégrammes de données, qui sont prévus pour l'acheminement redondant chez un participant ( 1, 2, 3, 4, 5 ),
lors de la réception du télégramme de données, par l'intermédiaire du premier accès ( 12, 15, 19 ) ou du deuxième accès ( 8, 11, 14 ) et de l'acheminement par l'intermédiaire d'un autre accès ( 6, 7, 10, 20, 22, 23, 25 ) du participant ( 1, 2, 3, 4, 5 ),
ou
lors de la réception du télégramme de données, par l'intermédiaire d'un autre accès ( 6, 7, 10, 20, 22, 23, 25 ) et de l'acheminement par l'intermédiaire du premier accès ( 12, 15, 19 ) ou du deuxième accès ( 8, 11, 14 ) du participant ( 1, 2, 3, 4, 5 ),
- on achemine un télégramme de données dupliqué, par l'intermédiaire du premier accès ( 12, 15, 19 ) du participant ( 1, 2, 3, 4, 5 ), lors de la réception ou de l'acheminement d'un télégramme de données, qui est prévu pour l'acheminement redondant, par l'intermédiaire du deuxième accès ( 8, 11, 14 ) du participant ( 1, 2, 3, 4, 5 ),
- on achemine un télégramme de données dupliqué, par l'intermédiaire du deuxième accès ( 8, 11, 14 ) du participant ( 1, 2, 3, 4, 5 ), lors de la réception ou de l'acheminement d'un télégramme de données, qui est prévu pour l'acheminement redondant, par l'intermédiaire du premier accès ( 12, 15, 19 ) du participant ( 1, 2, 3, 4, 5 ),
**caractérisé**
**en ce que** le système ( 26 ) de communication travaille de manière cyclique,
**en ce que** l'on affecte à un télégramme de données, qui est caractérisé comme étant prévu pour l'acheminement redondant, un numéro de cycle instantané, lors de l'injection dans le système ( 26 ) de communication et
**en ce que** l'accepteur d'un télégramme de données, qui est caractérisé comme étant prévu pour l'acheminement redondant, mémorise le numéro de cycle instantané du télégramme de données reçu.

2. Procédé suivant la revendication 1,
**caractérisé**
**en ce que** l'on caractérise des télégrammes de données, qui sont prévus pour l'acheminement redondant, par une caractéristique d'entête univoque.

3. Procédé suivant l'une des revendications 1 ou 2,
**caractérisé**
**en ce que** l'on utilise le trajet ( 18 ) de réseau ayant une interruption ( 17 ) logique, seulement pour les télégrammes de données, qui sont caractérisés comme des télégrammes de données prévus pour l'acheminement redondant.

4. Procédé suivant l'une des revendications précédentes,
**caractérisé**
**en ce que**, lors de l'injection d'un télégramme de données, qui est caractérisé comme étant prévu pour l'acheminement redondant, on consigne dans le système ( 26 ) de communication sur l'un des autres accès ( 6, 7, 10, 20, 22, 23, 25 ) d'un participant ( l, 2, 3, 4, 5 ), l'adresse d'envoi du participant ( 1, 2, 3, 4, 5 ), qui injecte le télégramme de données dans le système ( 26 ) de communication et un repérage supplémentaire dans la table d'adresse du participant ( 1, 2, 3, 4, 5 ), qui effectue l'injection.

5. Procédé suivant la revendication 4,
**caractérisé**
**en ce que** le repérage supplémentaire est constitué d'un binaire, qui peut prendre deux valeurs 0 ou 1.

6. Procédé suivant l'une des revendications précédentes,
**caractérisé**
**en ce qu**'à la réception d'un télégramme de données, qui est caractérisé comme étant prévu pour l'acheminement redondant, on contrôle sur l'un des autres accès ( 6, 7, 10, 20, 22, 23, 25 ) d'un participant ( 1, 2, 3, 4, 5 ) , si la table d' adresse du participant recevant a une consigne ayant l'adresse d'envoi du participant ( 1, 2, 3, 4, 5 ), qui a injecté le télégramme de données dans le système ( 26 ) de communication et un repérage supplémentaire,
dans lequel l'adresse d'envoi du participant ( 1, 2, 3, 4, 5 ), qui a injecté le télégramme de données dans le système ( 26 ) de communication et/ou un repérage supplémentaire dans la table d'adresse du participant ( 1, 2, 3, 4, 5 ) recevant est consigné et le télégramme de données concerné est acheminé, si une consigne de ce genre n'est pas présente ou dans lequel le télégramme de données concerné est acheminé, si une consigne de ce genre est présente.

7. Procédé suivant l'une des revendications précédentes,
**caractérisé**
**en ce qu**'à la réception d'un télégramme de données, qui est caractérisé comme étant prévu pour l'acheminement redondant, et/ou d'un télégramme de données dupliqué par l'intermédiaire du premier accès ( 12, 15, 19 ) ou du deuxième accès ( 8, 11, 14 ) d'un participant ( 1, 2, 3, 4, 5 ), on contrôle si la table d'adresse du participant recevant a une consigne ayant l'adresse d'envoi du participant ( 1, 2, 3, 4, 5 ), qui a injecté le télégramme de données concerné dans le système ( 26 ) de communication et un repérage supplémentaire,
dans lequel le télégramme de données concerné et/ou le télégramme de données dupliqué est supprimé, s'il y a une consigne de ce genre, ou
dans lequel le télégramme de données concerné et/ou le télégramme de données dupliqué est acheminé, s'il n'y a pas d'adresse d'envoi ou s'il y a une adresse d'envoi sans repérage supplémentaire.

8. Procédé suivant l'une des revendications précédentes,
**caractérisé**
**en ce que** l'accepteur d'un télégramme de données, qui est caractérisé comme étant prévu pour l'acheminement redondant, compare, à la réception du télégramme de données, le numéro de cycle du télégramme de données reçu au numéro de cycle instantané mémorisé par l'accepteur,
dans lequel l'accepteur prend en charge les données du télégramme de données reçues, si les deux numéros de cycle comparés ne coïncident pas ou,
dans lequel l'accepteur néglige les données du télégramme de données reçu et/ou supprime le télégramme de données, si les numéros de cycle comparés coïncident.

9. Participant à un système ( 26 ) de communication, notamment pour la communication en temps réel, dans lequel le participant ( 1, 2, 3, 4, 5 ) est marqué comme émetteur et/ou comme accepteur de télégrammes de données et est muni d'une adresse univoque, a au moins un premier accès ( 12, 15, 19 ) et un deuxième accès ( 8, 11, 14 ) pour la réception et/ou pour l'acheminement et au moins un autre accès ( 6, 7, 10, 20, 22, 23, 25 ) pour l'injection et/ou pour la réception et/ou pour l'acheminement de télégrammes de données, qui sont prévus pour l'acheminement redondant, et une table d'adresse pour la mémorisation d'au moins une adresse d'envoi d'un télégramme de données injecté, comprenant :
- des moyens de caractérisation de télégrammes de données, qui sont prévus pour l'acheminement redondant,
- des moyens d'injection des télégrammes de données, qui sont prévus pour l'acheminement redondant, dans le système ( 26 ) de communication, sur l'un des autres accès ( 6, 7, 10, 20, 22, 23, 25 ),
- des moyens de duplication de l'un des télégrammes de données, qui sont prévus pour l'acheminement redondant,
lors de la réception du télégramme de données, par l'intermédiaire du premier accès ( 12, 15, 19 ) ou du deuxième accès ( 8, 11, 14 ) et lors de l'acheminement, par l'intermédiaire d'un autre accès ( 6, 7, 10, 20, 22, 23, 25 ), ou
lors de la réception du télégramme de données, par l'intermédiaire d'un autre accès ( 6, 7, 10, 20, 22, 23, 25 ) et lors de l'acheminement, par l'intermédiaire du premier accès ( 12, 15, 19 ) ou du deuxième accès ( 8, 11, 14 ),
- des moyens d'acheminement d'un télégramme de données dupliqué, par l'intermédiaire du premier accès ( 12, 15, 19 ), lors de la réception ou de l'acheminement d'un télégramme de données, qui est prévu pour l'acheminement redondant, par l'intermédiaire du deuxième accès ( 8, 11, 14 ) et
- des moyens d'acheminement d'un télégramme de données dupliqué, par l'intermédiaire du deuxième accès ( 8, 11, 14 ), lors de la réception ou de l'acheminement d'un télégramme de données, qui est prévu pour l'acheminement redondant, par l'intermédiaire du premier accès ( 12, 15, 19 ),
**caractérisé**
**en ce que** le participant ( 1, 2, 3, 4, 5 ) est un participant d'un système ( 26 ) de communication, le système ( 26 ) de communication travaillant de manière cyclique,
**en ce que** le participant ( 1, 2, 3, 4, 5 ) affecte un numéro de cycle instantané, lors de l'injection dans le système ( 26 ) de communication à un télégramme de données, qui est caractérisé comme étant prévu pour l'acheminement redondant, et
**en ce que** le participant ( 1, 2, 3, 4, 5 ) est l'accepteur d'un télégramme de données, qui est caractérisé comme étant prévu pour l'acheminement redondant, mémorise le numéro de cycle instantané du télégramme de données reçu.

10. Participant suivant la revendication 9,
**caractérisé**
**en ce que** le participant ( 1, 2, 3, 4, 5 ) **caractérise par** une caractérisation d'entête univoque les télégrammes de données, qui sont prévus pour l'acheminement redondant.

11. Participant suivant l'une des revendications 9 ou 10,
**caractérisé**
**en ce que** le participant ( 1, 2, 3, 4, 5 ) consigne, lors de l'injection d'un télégramme de données, qui est caractérisé comme étant prévu pour l'acheminement redondant, dans le système ( 26 ) de communication sur l'un des autres accès ( 6, 7, 10, 20, 22, 23, 25 ), l' adresse d'envoi du participant ( 1, 2, 3, 4, 5 ) injectant et un repérage supplémentaire dans la table d'adresse du participant ( 1, 2, 3, 4, 5 ) injectant.

12. Participant suivant l'une des revendications 9 à 11,
**caractérisé**
**en ce que** le participant ( 1, 2, 3, 4, 5 ) contrôle à la réception d'un télégramme de données, qui est caractérisé comme étant prévu pour l'acheminement redondant, sur l'un des autres accès ( 6, 7, 10, 20, 22, 23, 25 ), si la table d'adresse du participant recevant a une consigne ayant l'adresse d'envoi du participant ( 1, 2, 3, 4, 5 ), qui a injecté le télégramme de données dans le système ( 26 ) de communication et un repérage supplémentaire,
dans lequel le participant recevant consigne l'adresse d'envoi du participant ( 1, 2, 3, 4, 5 ), qui a injecté le télégramme de données dans le système ( 26 ) de communication et/ou un repérage supplémentaire dans la table d'adresse, et achemine le télégramme de données concerné, si une consigne de ce genre n'est pas présente, ou
dans lequel le participant ( 1, 2, 3, 4, 5 ) recevant achemine le télégramme de données concerné, si une consigne de ce genre est présente.

13. Participant suivant l'une des revendications 9 à 12,
**caractérisé**
**en ce que** le participant ( 1, 2, 3, 4, 5 ) contrôle un télégramme de données, qui est caractérisé comme étant prévu pour l'acheminement redondant et/ou un télégramme de données dupliqué à la réception, par l'intermédiaire du premier accès ( 12, 15, 19 ) ou du deuxième accès ( 8, 11, 14 ), si la table d'adresse du participant recevant a une consigne ayant l'adresse d'envoi du participant ( 1, 2, 3, 4, 5 ), qui a injecté le télégramme de données concerné dans le système ( 26 ) de communication et un repérage supplémentaire,
dans lequel le participant ( 1, 2, 3, 4, 5 ) recevant supprime le télégramme de données concerné et/ou le télégramme de données dupliqué, si une consigne de ce genre est présente ou dans lequel le participant ( 1, 2, 3, 4, 5 ) recevant achemine le télégramme de données concerné et/ou le télégramme de données dupliqué, s'il n'y a pas d'adresse d'envoi et/ou pas de repérage supplémentaire.

14. Participant suivant l'une des revendications 9 à 13,
**caractérisé**
**en ce que** le participant ( 1, 2, 3, 4, 5 ) est l'accepteur d'un télégramme de données, qui est caractérisé comme étant prévu pour l'acheminement redondant, compare à la réception du télégramme de données le numéro de cycle du télégramme de données reçu au numéro de cycle instantané mémorisé par l'accepteur, dans lequel l'accepteur prend en charge les données du télégramme de données reçu, si les deux numéros de cycle comparés ne coïncident pas, ou
dans lequel l'accepteur néglige les données du télégramme de données reçu et/ou supprime le télégramme de données, si les deux numéros de cycle comparés coïncident.

15. Participant suivant l'une des revendications 9 à 14,
**caractérisé**
**en ce que** le participant ( 1, 2, 3, 4, 5 ) est un noeud de réseau ayant une unité de couplage intégrée.

16. Participant suivant la revendication 15,
**caractérisé**
**en ce que** l'unité de couplage intégrée est un realtime ethernet switch.

17. Participant suivant l'une des revendications 9 à 16,
**caractérisé**
**en ce que** le participant ( 1, 2, 3, 4, 5 ) est un appareil d'automatisation.

18. Système de communication ayant plusieurs participants suivant l'une des revendications 9 à 17.

19. Système de communication suivant la revendication 18,
**caractérisé**
**en ce que** le système de communication a au moins un trajet ( 18 ) de réseau ayant une interruption ( 17 ) logique, le trajet ( 18 ) de réseau ayant une interruption ( 17 ) logique étant utilisé seulement par les télégrammes de données, qui sont caractérisés comme des télégrammes de données prévus pour l'acheminement redondant.

20. Système de communication suivant l'une des revendications 18 ou 19,
**caractérisé**
**en ce que** le système de communication est un système de communication commuté du type ethernet ou d'un type realtime ethernet.

21. Système de communication suivant l'une des revendications 18 à 20,
**caractérisé**
**en ce que** le système de communication est un système d'automatisation.
